# EUROPÄISCHE PATENTSCHRIFT

(11) **EP 3 814 121 B1**
(45) Veröffentlichungstag und Bekanntmachung des Hinweises auf die Patenterteilung: **02.08.2023**
(21) Anmeldenummer: 19752080.2
(22) Anmeldetag: 25.06.2019
(51) Int. Cl.: B29C 70/38, B29C 70/52, B29C 70/20

(54) **VERFAHREN UND VORRICHTUNG ZUR PRODUKTION VON FASERVERBUNDWERKSTOFF AUFWEISENDEN WERKSTÜCKEN**
METHOD AND DEVICE FOR PRODUCING WORKPIECES COMPRISING FIBRE COMPOSITE MATERIAL
PROCÉDÉ ET DISPOSITIF DE PRODUCTION DE PIÈCES COMPORTANT UN MATÉRIAU COMPOSITE RENFORCÉ DE FIBRES

(30) Priorität: 26.06.2018 DE 102018115392
(43) Veröffentlichungstag der Anmeldung: 05.05.2021
(73) Patentinhaber: AZL Aachen GmbH, 52074 Aachen (DE); Rheinisch-Westfälische Technische Hochschule (RWTH) Aachen, 52062 Aachen (DE)
(72) Erfinder: WEILER, Thomas, 52074 Aachen (DE); SCHARES, Richard, 52074 Aachen (DE); WENDT, Albert, 52074 Aachen (DE); GIESGEN, Lazlo, 52074 Aachen (DE); TIMMERMANNS, Ruben Johannes Matthias, 52074 Aachen (DE)
(74) Vertreter: Naeven, Ralf
(86) Internationale Anmeldenummer: PCT/DE2019/100586
(87) Internationale Veröffentlichungsnummer: WO 2020/001702

(56) Entgegenhaltungen:
- EP-A2- 1 422 048
- WO-A1-96/20824
- WO-A1-2017/127276
- DE-A1-102014 201 060
- DE-A1-102016 104 926
- US-A1- 2018 036 966

## Beschreibung

Die Erfindung betrifft ein Verfahren gemäß dem Oberbegriff des Anspruchs 1 sowie eine Vorrichtung gemäß dem Oberbegriff des Anspruchs 9.

In vielen Anwendungsbereichen, z. B. in der Luft- und Raumfahrttechnik haben sich Hochleistungsfaserverbundbauteile etabliert, die überall dort, wo geringes Gewicht bei gleichzeitig hoher mechanischer Belastbarkeit gefordert wird, besonders geeignet sind. Die Hochleistungsfaserverbundbauteile können durch Ablegen endlos faserverstärkter Bänder, auch Tapes genannt, erzeugt werden. Die verstärkenden Fasern können z.B. als Garne, Gewebe oder Gelege vorliegen und aus Kohlenstoff, Glas oder sonstigen natürlichen oder künstlich hergestellten Materialien bestehen. In den Bändern sind die Fasern fixiert und/oder in einer Kunststoffmatrix eingebettet, die beispielsweise aus einem Thermoplast oder einem Duroplast besteht. Sind die Bänder bereits vor dem Ablegen auf dem Werkstück oder auf einem Substrat zumindest weitgehend in der Kunststoffmatrix eingebettet, spricht man auch von Prepreg-Bändern (pre-impregnated fibers). Prepreg-Bänder können vor der Ablage auf ihrer Ablageseite mit einem Anheftmaterial, z.B. einem reaktiven Schmelzkleber versehen werden und/oder auf einem Trägermaterial liegen, welches vor dem Ablegen der Bänder entfernt wird. Es können auch Trockenfasern abgelegt und fixiert werden, um sie anschließend zu imprägnieren und/oder mit einer Kunststoffmatrix zu umhüllen, so dass das fertige Band quasi bei der Ablage erzeugt wird. Als Fixiermedium für Trockenfasern können beispielsweise Binder, Schmelzfäden oder Vernähungen genutzt werden.

Für die Erzeugung der Werkstücke werden Bänder maschinell vorgeschoben oder vorgezogen, auf ein Substrat angedrückt und automatisiert abgelegt. Die Bänder können vor oder während der Ablage auf die gewünschte Länge geschnitten werden. Zur Herstellung von flächigen Bauteilen, werden mehrere Bänder in definiertem Abstand, z.B. Stoß an Stoß, einander überlappend oder mit Abstand zueinander, abgelegt. Die unterste Schicht des Faserverbundwerkstoffs kann auf ein Substrat abgelegt werden, welches später Teil des fertigen Werkstückes ist oder wieder entfernt wird. Die Dicke des Bauteils wird durch Ablegen mehrerer Lagen übereinander erzeugt, ggf. auch mit unterschiedlichen Faserorientierungen, um Vorgaben hinsichtlich des Laminataufbaus zu erfüllen. Auf diese Weise können auch lokale Bauteilverstärkungen, oder Vorzugsrichtungen erreicht sowie lokale Werkstückbereiche ausgelassen werden. Somit können Materialkosten im Bauteil zu reduziert werden.

Die kosteneffiziente Skalierung der Ausbringmenge der Prozesse zur Produktion von Faserverbundwerkstoff aufweisenden Werkstücken ist ein zentraler Aspekt der Weiterentwicklung, um aufgrund einer damit verbundenen Kostenreduzierung die wirtschaftlich sinnvollen Einsatzfelder vergrößern zu können.

Aus der US 6607626 B2 sind ein Verfahren sowie eine Vorrichtung der eingangs genannten Art bekannt. Dort ist offenbart, zur Herstellung von Faserverbundwerkstoff aufweisenden Werkstücken, zum Beispiel von Karosserieteilen von Fahrzeugen, eine Basiseinheit auf einem Förderband nacheinander mehreren Applikationsstationen zuzuführen, an denen jeweils das Faserverbundwerkstoff in Form von Bändern auf die jeweilige Basiseinheit appliziert wird. Auf diese Weise entstehen mehrere übereinanderliegende Schichten des Faserverbundwerkstoffs. Die Applikationsstationen weisen jeweils eine Mehrzahl von Verlegeköpfen für das abzulegende Bandmaterial auf. Die Verlegeköpfe sind an einer gemeinsamen Trägereinheit angeordnet, welche quer zur Förderrichtung des Förderbandes bewegbar ist. Zudem weisen die Verlegeköpfe jeweils ein relativ um eine zur Förderebene senkrechten Achse rotierbares Bandführungselement auf. Somit kann die Ausrichtung der abzulegenden Bänder relativ zur Förderrichtung geändert werden, sodass mittels der Querbewegung der Trägereinheit während der Bandablage in den verschiedenen Applikationsstationen unterschiedliche Ablege-Richtungen der Bänder relativ zur Förderrichtung vorgesehen werden können. Die Rotationsbewegungen der Bandführungselemente müssen mit der Querbewegung der Trägereinheit koordiniert werden um die gewollte Ausrichtung der abzulegenden Bänder zu erreichen. Zudem ist die Varianz der möglichen Ablege-Richtungen auf der Basiseinheit begrenzt. Die Beschleunigung großer Massen in Querrichtung begrenzt die Anlagendynamik und somit die Ablegegeschwindigkeit besonders bei hohen Ablegewinkeln. Aufgrund der Querbewegung gibt es eine sich räumlich verändernde Prozesszone. Dies erschwert Anbringung von Sicherheits- und Qualitätssicherungsvorrichtungen.

Die EP 2 925 509 B1 offenbart eine Tape-Legevorrichtung mit einem rotatorisch und translatorisch bewegbaren Ablegetisch. In einer Variante dieses Standes der Technik können in einer einzigen Legekopfeinheit nacheinander zwei Bänder von unterschiedlichen Materialzuführungseinheiten aus abgezogen, auf die passende Länge geschnitten und auf den an geeigneter Stelle platzierten Ablegetisch abgelegt werden. Zum Fixieren der abgelegten Bänder ist eine Bandhefteinheit vorgesehen, die gemäß den Zeichnungen eine Vielzahl von in Reihe angeordneten Einzelvorrichtungen, vermutlich Ultraschall-Sonotroden, umfasst. In einer Variante mit zwei Legekopfeinheiten, die für einen gemeinsamen Legetisch zugänglich sind, sind die Legekopfeinheiten voneinander unabhängig und weisen jeweils eine eigene Material-Zuführungseinheit, eine Schneideinrichtung, Greifmittel für die Bänder und für jedes Greifmittel einen zugehörigen Linearantrieb, Führungsbahnen für das jeweilige abzulegende Band und eine Bandhefteinheit auf. In dieser Konfiguration kann ein Bandabschnitt auf Länge gezogen, in Führungsbahnen positioniert und mit der ersten Legekopfeinheit auf dem zu produzierenden Teil in Position geheftet werden, während gleichzeitig der nächste Bandabschnitt auf Länge gezogen und auf der zweiten Legekopfeinheit in den Führungsbahnen positioniert wird. Nachdem der erste Bandabschnitt von der ersten Legekopfeinheit angeheftet wurde, befördert der Legetisch das zu produzierende Teil zur zweiten Legekopfeinheit, währenddessen der nächste Bandabschnitt vorbereitet und in Position gebracht ist, um am zu produzierenden Teil angeheftet zu werden. Demnach wird jeweils lediglich ein Band zu einer bestimmten Zeit abgelegt und angeheftet. Die gemäß diesem Stand der Technik erforderliche Bewegung des Ablegetisches und der auf dem Ablegetisch befindlichen Aktorik bedeutet eine Bewegung relativ hoher Massen im Verhältnis zu den damit applizierten Bandmassen. Zudem werden unter Nutzung einer Bandhefteinheit, offensichtlich in Form von Ultraschall-Sonotroden, die Bänder nach dem Ablegen jeweils einzeln nachträglich angeheftet, was eine nachträgliche Konsolidierung des mit den Bändern erzeugten Laminates vor Weiterverarbeitung erfordert.

Die DE 20 2016 105 889 U1 offenbart eine weitere Vorrichtung zur Produktion von Faserverbundwerkstoff aufweisenden Werkstücken, bei dem Faserverbundwerkstoff-Bänder mittels einer Applikationsstation auf einen rotatorisch und translatorisch bewegbaren Legetisch abgelegt werden. Mittels Unterdruck werden die zu produzierenden Werkstücke auf einer Tischplatte des Legetisches fixiert. Der Tisch wird für das Aufbringen mehrerer Schichten mehrfach unter der Applikationsstation verfahren und bei Bedarf rotiert, um unterschiedliche Ablege-Richtungen für die Bänder zu ermöglichen. Jedes Band wird dabei einzeln abgelegt. Für die Zuführung des Bandes ist ein Puffersystem offenbart, welches z.B. als Tänzersystem ausgebildet sein kann, und einen Bandvorrat vorhält, der ein Auswechseln eines Bandvorrats erlaubt, ohne den Produktionsprozess unterbrechen zu müssen. Zudem kann das Puffersystem dazu dienen, den für ein Schneiden des Bandes auf die gewünschte Ablegelänge benötigten Stoppvorgang im Bereich der Schneiden zu ermöglichen, ohne ein kontinuierliches Abspulen des Bandes vom Vorrat zu unterbrechen. Des Weiteren ist offenbart, das Bandmaterial dem Ablegeprozess bereits als fertig abgelängte Bänder zuzuführen. Auf diese Weise kann ein Schneideprozess entbehrlich sein. Für den Ablegeprozess werden die abgelängten Bänder mittels Unterdruck hängend im Legekopf transportiert. Es ist auch offenbart, mehrere Bänder simultan abzulegen. Das Fixieren der abgelegten Bänder erfolgt mittels Hefteinrichtungen unter Einsatz von Ultraschall. Hier sind ebenfalls die bereits zur EP 2 925 509 B1 genannten Nachteile gegeben, was auch für den folgenden Stand der Technik gilt.

Die US 8,048,253 B2 beschreibt eine Tape-Legevorrichtung, die in einer Variante mehrere Legeköpfe aufweist, so dass es möglich wird, mehrere Tapes bzw. Tapestreifen gleichzeitig abzulegen. Das Bandmaterial wird einer Schneideinrichtung zugeführt, welche ein Band in der gewünschten Länge abtrennt und anschließend mit der zugehörigen Ablegeeinheit auf die Bearbeitungsfläche eines Legetisches platziert wird, der in zwei Richtungen einer Verschiebe-Ebene translatorisch bewegbar ist und um eine senkrecht zu der Verschiebe-Ebene ausgerichteten Rotationsachse rotiert werden kann. Das abgetrennte Band wird in dem Legekopf jeweils in Führungsschienen geführt, die zu beiden Seiten des Bandes angeordnet sind, wobei Kanten des Bandes in Nuten der Führungsschienen gehalten sind. Das Fixieren der Bänder erfolgt mittels Ultraschall-Sonotroden.

Des Weiteren ist eine Variante einer Bandablegevorrichtung zur Produktion von Faserverbundwerkstoff aufweisenden Werkstücken mit rotierbarem und translatorisch verfahrbarem Ablegetisch bekannt (https://www.fill.co.at/de/automotive kunststofftechnik/composites/fiber-&-preforming/multilayer/video/1358p572i30.html, 22.06.2018), bei der der Ablegetisch in einer gewünschten Orientierung unter eine Batterie von parallel zueinander angeordneten und relativ zueinander verfahrbaren Ablegeeinheiten platziert wird. Die Ablegeeinheiten werden bei stillstehendem Ablegetisch in Gruppen oder einzeln verfahren, anschließend der Tisch translatorisch und/oder rotatorisch bewegt und in einer neuen Ausrichtung erneut unter die Ablegeeinheit-Batterie bewegt. Wenn sich das Ablegemuster von Lage zu Lage der Bänder unterscheidet, kann es erforderlich sein, dass lediglich ein Teil der Ablegeeinheiten in einer bestimmten Lage zum Einsatz kommen. So kann es je nach Ablegemuster zu hohen Stillstandzeiten bei den Ablege-Einheiten kommen. Daraus resultieren ein ungenutztes Invest sowie eine auf den Bauraum bezogene hohe Maschinenkomplexität, insbesondere durch einen hohen Bedarf an Linearaktoriken für die Ablegeeinheiten, nämlich jeweils eine pro Ablegeeinheit. Auch bei diesem Maschinenprinzip kommt es zu großen bewegten Massen.

Die DE 10 2014 201 060 A1 offenbart eine Faserlegeanlage, bei der eine Mehrzahl von Applikationsstationen, dort Faserlegemaschinen genannt, an einer Fördereinrichtung angeschlossen ist. Die Faserlegeanlage weist eine Aufnahmestelle auf, von der aus Haltemittel für Basiseinheiten, in der vorgenannten Publikation Paletten für Formwerkzeuge genannt, mittels eines Förderschlittens zu den Applikationsstationen transportiert werden. Im Eingangsbereich der jeweiligen Applikationsstation wird das jeweilige Haltemittel mittels einer Handhabungseinheit auf einen Werkzeugtisch eines in X-Richtung verfahrbaren Schlittens aufgelegt, der anschließend innerhalb einer mit Türen verschließbaren Ablegekammer unter einem Ablegekopf verfahren wird. In der Ablegekammer kann der Ablegekopf in Y-Richtung und in der Höhe verfahren werden, während der Schlitten in X-Richtung verfahrbar bleibt und der Werkzeugtisch rotierbar ist. Es ist auch ein Verfahren des Tisches in X-Richtung während des Bandablegens offenbart. Somit können innerhalb der geschlossenen Ablegekammer dreidimensionale Basiseinheiten (Formwerkzeuge) mit Bändern belegt werden.

Aus der WO 2017/127276 A1 ist eine einzelne Applikationsstation bekannt, durch die hindurch ein um seine vertikale Achse drehbarer Ablegetisch auf einer Fördereinrichtung hin und her geführt wird. Es ist davon auszugehen, dass vor dem Ablegen der Bänder der Ablegetisch in die gewünschte Orientierung gedreht wird und die Ablegeeinheit für das Bandablegen translatorisch in einer Richtung senkrecht zur Förderrichtung der Fördereinrichtung bewegt. Somit erfolgt das Ablegen der Bänder bei stillstehendem Ablegetisch und in der Applikationsstation mit bewegter Ablegeeinheit..

Die EP 1 422 048 A2 offenbart eine zu stationären Werkstücken verfahrbare brückenförmige Ablegeeinheit mit einer Vielzahl von Legeköpfen. Die Ablegeköpfe sind beidseitig an der Brückentraverse so versetzt angeordnet, dass ein lückenloses Ablegen möglich ist, wobei hierfür allerdings zwei Verfahrvorgänge der Ablegeeinheit in entgegengesetzten Richtungen vorgesehen sind.

Aus der DE 10 2016 104 926 A1 ist eine komplexe Maschine bekannt, bei der von einer Spule entnommenes Bandmaterial zunächst zugeschnitten und dann über schmale Förderbänder einer Ablegeeinheit zugeführt wird. Ablegeköpfe nehmen mittels Vakuums die zugeschnittenen Bandstücke auf, führen diese zu einem Ablegetisch und legen sie ab. Sind in einer ersten Lage hinreichend viele Bänder abgelegt, wird die abgelegte Lage von einer Transporteinheit aufgenommen und auf einem weiteren Tisch abgelegt. Dieser zweite Tisch wird gedreht, um eine weitere am ersten Ablagetisch abgelegte Lage dann mit der gewünschten Orientierung auf die erste Lage legen zu können.

Aus der US 2018/036966 A1 sind ein Verfahren und eine Vorrichtung der eingangs genannten Art bekannt zur Fertigung von Faser-Verbundbauteilen. Die Vorrichtung umfasst zumindest eine erste Faserlegemaschine zur Aufbringung von Fasergelegen auf ein Werkstück und eine weitere, von der Faserlegemaschine verschiedene Bearbeitungsstation zur Modifizierung des Werkstücks. Das Werkstück kann mittels einer automatisierten Fördereinrichtung sowohl zu der Faserlegemaschine als auch zu der weiteren Bearbeitungsstation transportiert werden.

Die WO 96/20824 A1 offenbart ein Verfahren und eine Vorrichtung zur Herstellung von Verstärkungseinlagen für Verbundstoffe. Aus Fasermaterial werden in Verbindung mit Matrixmaterial Profilstäbe gebildet, wobei diese Profilstäbe auf oder in einem Werkstückträger nach einem vorgewählten Strukturmuster positioniert und vor oder nach der Positionierung auf ein dem Strukturmuster entsprechendes Maß abgeschnitten werden. Zur Positionierung der Profilstäbe kann ein rotierbarer Werkstückträger eingesetzt werden. Die positionierten Profilstäbe können derart untereinander verbunden werden, z.B. mittels Pressvorgängen, dass hierdurch Verstärkungseinlagen z.B. für Trennscheiben oder Schleifscheiben erzeugt werden können. Die Profilstäbe sind aufrollbar oder nicht. Für den letzteren Fall ist es offenbart, einzelne Profilstäbe zur Erzeugung längerer Einheiten miteinander zu verbinden.

Der hier betroffenen Erfindung liegt die technische Aufgabe zu Grunde, ein Verfahren sowie eine Vorrichtung der eingangs genannten Art zur Verfügung zu stellen, die gegenüber dem Stand der Technik wirtschaftlicher sein kann, z.B. durch die Reduzierung bewegter Massen in Relation zu der abgelegten Bandmenge und der Minimierung der Stillstandzeiten von Ablegeeinheiten.

Die technische Aufgabe wird hinsichtlich des Verfahrens mit den kennzeichnenden Merkmalen des Anspruchs 1 und hinsichtlich der Vorrichtung mit den kennzeichnenden Merkmalen des Anspruchs 9 gelöst.

Vorteilhafte Ausführungsformen des erfindungsgemäßen Verfahrens sowie der erfindungsgemäßen Vorrichtung ergeben sich aus den abhängigen Ansprüchen.

Demzufolge wird hinsichtlich eines Verfahrens zur Produktion von Faserverbundwerkstoff aufweisenden Werkstücken, bei dem eine von Haltemitteln einer Fördereinrichtung gehaltene Basiseinheit durch mindestens eine Applikationsstation geführt wird und zur Bildung der Werkstücke an der Applikationsstation oder an mindestens einer der Applikationsstationen während einer Translationsbewegung der Basiseinheit durch die betroffene Applikationsstation mindestens ein zum Faserverbundwerkstoff gehörendes Band auf die Basiseinheit abgelegt wird, vorgeschlagen, dass in Förderrichtung vor der Applikationsstation oder vor mindestens einer der Applikationsstationen die räumliche Ausrichtung der Basiseinheit mittels mindestens einer Rotation relativ zu den Haltemitteln geändert wird.

Unter Ablegen eines Bandes im Sinne der Erfindung wird sowohl das Ablegen eines Prepreg-Bandes verstanden als auch das Ablegen von Fasermaterial, welches erst unmittelbar vor, während oder unmittelbar nach dem Ablegen mit einem Binder imprägniert und/oder mit einer Kunststoffmatrix umgeben wird.

Das Ablegen eines Bandes auf die Basiseinheit meint sowohl das Aufbringen einer ersten Schicht auf die Basiseinheit als auch das Aufbringen einer weiteren Schicht auf mindestens eine bereits vorhandene Schicht von abgelegten Bändern.

Unter dem Begriff der Basiseinheit im Sinne der Erfindung ist sowohl eine noch nicht mit Bandmaterial belegte freie Grund-Basiseinheit, wie z.B. ein Trägerelement, Substrat, ein Organoblech, ein Textilmaterial oder eine Kunststofffolie, zu verstehen als auch eine Grund-Basiseinheit, auf der bereits Bandmaterial bis hin zum fertigen Werkstück abgelegt wurde. Die Grund-Basiseinheit kann zum Bestandteil des fertigen Werkstückes werden oder aber, vorzugsweise wiederverwendbar, vom aufgetragenen Werkstück abgetrennt werden.

Unter einer Basiseinheit soll aber auch eine erste Lage mit mindestens einem nicht auf eine Grund-Basiseinheit abgelegten Band zu verstehen sein. Eine solche erste Bandlage kann z.B. direkt auf den Haltemitteln der Fördereinrichtung abgelegt werden. Diese Haltemittel sind nicht Bestandteil einer Basiseinheit.

Unter dem Begriff Bandmaterial wird sowohl ein vorgefertigtes Band (Prepreg-Band) mit Verstärkungsfasern und Binder und/oder Kunststoffmatrix verstanden als auch ein von einer Vorratsrolle stammendes, bereits vorimprägniertes oder nicht imprägniertes Fasermaterial, das möglicherweise erst kurz vor seinem Ablegen, während des Ablegens oder unmittelbar nach seinem Ablegen zum fertigen Band vervollständigt wird. Wenn es heißt, dass ein Band mit dem Bandmaterial gebildet ist, bedeutet dies somit, dass die Bandbildung entweder allein durch das Ablegen des entsprechenden Bandmaterialstücks auf der Basiseinheit gegeben ist oder durch Hinzufügen weiteren Materials, wie zum Beispiel der Kunststoffmatrix erfolgt. Vorimprägnierte Bänder können in verschiedenen Dicken, Breiten und Faservolumengehältern vorkommen.

Die Fördereinrichtung kann z.B. angetriebene Reibtransportbänder, Rollenbahnen, Kugelbahnen, Vakuumbänder, Magnetschlitten und/oder Laufkatzen mit Linearantrieb aufweisen. Die Fördereinrichtung kann aus mehreren Förderteileinrichtungen bestehen, so dass die Gesamtfördereinrichtung in unterschiedlichen Konfigurationen angeordnet oder zusammengesetzt sein kann.

Mit dem erfindungsgemäßen Verfahren bzw. der erfindungsgemäßen Vorrichtung ist eine komplette Automatisierbarkeit des Produktionsverfahrens möglich. Die Ausrichtungsänderung erfolgt außerhalb der Applikationsstation(en), wobei die Ausrichtungseinheit vorzugsweise als Teil der Fördereinrichtung betrachtet werden kann. Mit der Änderung der Ausrichtung der Basiseinheit relativ zu den sie tragenden Haltemitteln ist eine potentiell wirtschaftlich wesentlich effektiver Alternative zu der aus dem Stand der Technik bekannten Lösung mit translatorisch und rotatorisch bewegbarem Ablegetisch gegeben. Die Änderung der Ausrichtung der Basiseinheit relativ zu den Haltemitteln bedeutet eine wesentlich geringere zu bewegende Masse bezogen auf die Menge des abzulegenden Bandmaterials. Zudem wird vermieden, dass Ablegeeinheiten zusätzliche aufwändige robotergeführte Bewegungsaktoriken für die Bandablage aufweisen müssen. Da im Bereich der Applikationsstationen auf verfahrbare Ablegeeinheiten verzichtet werden kann, kann dort eine statische Prozesszone eingerichtet werden, so dass lokale Schutzeinhausungen, Prozess-Sensorik, Zusatzprozesse und die endlose Zuführung des Bandmaterials kostengünstig realisierbar sind.

Für die Ausrichtungsänderung kann eine Ausrichtungseinheit von oben, d. h. in Richtung der Schwerkraft, auf die Basiseinheit zugeführt werden und zum Beispiel durch Einsatz von Vakuum oder auf andere Weise greifen. Alternativ kann die Ausrichtungseinheit von unten, also durch die Förderebene hindurch, auf die Basiseinheit zugreifen. Das Fassen oder Fixieren der Basiseinheit durch die Ausrichtungseinheit kann in diesem Falle von der Schwerkraft unterstützt und erforderlichenfalls durch zusätzliche technische Merkmale verstärkt werden. Für die Ausrichtungsänderung kommen beispielsweise auch mindestens eine Stoßkante, welche vorzugsweise an der Fördereinrichtung angebracht ist, unterschiedlich schnell laufende Förderelemente, z.B. Bänder, Rutschen oder Fallgruben in Betracht.

Die Ausrichtungseinheit kann aber auch zur Stapelung einer Mehrzahl von Basiseinheiten eingerichtet sein. Dabei ist denkbar, dass zur Ausrichtungsänderung der zuoberst liegenden Basiseinheit der gesamte Stapel der Basiseinheiten in der Ausrichtung geändert, vorzugsweise rotiert, wird. Der Stapel kann für den Bearbeitungsprozess als Puffer dienen.

Die Ausrichtungsänderung kann z.B. eine Rotation um eine senkrecht zu einer Förderebene ausgerichteten Rotationsachse sein, wobei die Basiseinheit parallel zur Förderebene gefördert wird, z.B. unmittelbar oder mittelbar auf der Förderebene aufliegend. Es sind aber auch anders ausgerichtete Rotationsachsen alternativ oder zusätzlich möglich, z.B. um die Basiseinheit zu wenden.

Das erfindungsgemäße Verfahren kann auch so ausgeführt werden, dass die Ausrichtungsänderung erfolgt, während die Basiseinheit auf der Fördereinrichtung gefördert wird. In diesem Fall würde sich die Ausrichtungseinheit zusammen mit der Basiseinheit oder mit einem Stapel der Basiseinheiten in Förderrichtung bewegen. Eine Aktorik zur Ausrichtungsänderung kann von der Fördereinrichtung mitgeführt werden. Die Ausrichtungseinheit kann auch als Teil der Fördereinrichtung betrachtet werden. Denkbar ist aber auch ein von einer zusätzlich zur Fördereinrichtung bewegten Einheit durchgeführter Zugriff auf die Basiseinheit.

Selbstverständlich kann die Ausrichtungsänderung auch während eines Förderstopps durchgeführt werden, unabhängig davon, ob die Aktoren für die Ausrichtungsänderung von der Fördereinrichtung mitgeführt werden oder nicht.

Die erste aus mindestens einem Band bestehende Schicht kann direkt auf ein Element der Fördereinrichtung abgelegt werden, z.B. auf den Haltemitteln der Fördereinrichtung, womit eine Basiseinheit für die Ablage mindestens einer weiteren Schicht erzeugt wird. Das erfindungsgemäße Verfahren kann aber auch so ausgeführt werden, dass eine erste aus mindestens einem Band bestehende Schicht auf eine nicht zur Fördereinrichtung gehörende Grund-Basiseinheit abgelegt wird, z.B. auf einen Werkstückträger. Die Gesamtheit aus Grund-Basiseinheit und abgelegter erster Schicht bildet dann die Basiseinheit für das weitere Verfahren.

Weiterhin kann das erfindungsgemäße Verfahren so ausgeführt werden, dass die Basiseinheit in der Fördereinrichtung zumindest auch außerhalb der mindestens einen Applikationsstation mit Wärme beaufschlagt wird. Dies kann mittels mindestens einer entlang der Fördereinrichtung angeordneten Temperiereinheit durchgeführt werden. Hierdurch kann ein Aufwand zum Aufheizen der Basiseinheit in der in Förderrichtung hinter der Temperier-Maßnahme folgenden Applikationsstation vermieden oder verringert werden. Zudem können auf diese Weise eventuell schädliche Temperaturschwankungen der mindestens einen Basiseinheit vermieden werden. Dabei kann es vorteilhaft sein, eine Grund-Basiseinheit oder eine gesonderte Trägereinheit für die Basiseinheit einzusetzen, die einen hohen Wärmeübergangskoeffizienten zum mindestens einen aufgelegten Band und weiter vorzugsweise eine niedrige Wärmeleitfähigkeit aufweist.

Des Weiteren kann das erfindungsgemäße Verfahren so ausgeführt werden, dass Bandmaterial zur Bildung des mindestens einen Bandes in mindestens einem Vorratsbehälter vorgehalten wird. Dabei kann es insbesondere vorteilhaft sein, wenn an mindestens einer der Applikationsstationen mindestens zwei der Vorratsbehälter derart mit Bandmaterial bestückt werden, dass sie bei planmäßiger Bandablage mit vorgegebenem Ablegemuster gleichzeitig oder zumindest in etwa gleichzeitig erschöpft sind. Dies hat den enormen wirtschaftlichen Vorteil, dass die beteiligten Vorratsbehälter gleichzeitig ausgetauscht werden können, ohne dass ein erheblicher Rest des Bandmaterials in mindestens einem der Vorratsbehälter verbleibt. Bei einem Vorratsbehälter kann es sich z.B. um eine Spule oder eine Rolle mit aufgewickeltem Bandmaterial oder einem Magazin mit z.B. gestapeltem Bandmaterial oder Bandmaterial in Mäanderfalzung.

Weiterhin kann das erfindungsgemäße Verfahren so ausgeführt werden, dass vor dem Austausch eines ersten der Vorratsbehälter durch einen zweiten der Vorratsbehälter das Bandmaterial des zweiten Vorratsbehälters an das Bandmaterial des ersten Vorratsbehälters gefügt wird. Das Fügen kann manuell oder vorzugsweise in einem automatisierten Prozess erfolgen. Hierdurch kann erreicht werden, dass auch bei Austausch eines Vorratsbehälters der Produktionsprozess kontinuierlich fortgeführt werden kann oder lediglich verhältnismäßig kurz unterbrochen werden muss. Dabei kann vorgesehen werden, dass das Bandmaterial über eine Pufferzone, zum Beispiel mit einem Tänzersystem, geführt wird.

Das erfindungsgemäße Verfahren kann auch so ausgeführt werden, dass durch das Einbringen von Solltrennstellen zumindest eine Teilmenge des Bandmaterials in erleichtert voneinander trennbare Bandmaterialteilstücke aufgeteilt wird, deren jeweilige Länge exakt oder zumindest im Wesentlichen der Länge des damit zu bildenden Bandes entspricht. Hierdurch kann ein gesonderter Schneideprozess vermieden werden. Die Solltrennstellen können beispielsweise durch eine Perforation oder teilweise Durchtrennung des Bandmaterials in Breitenrichtung, durch Verbinden der Enden aufeinanderfolgender Bandmaterialstücke mittels klebender Kuppelstücke oder durch Aneinanderheften der einander überlappenden Enden der aufeinanderfolgenden Bandmaterialstücke oder durch Fixieren voneinander getrennter Bandmaterialstücke auf einer Trägerfolie eingebracht werden. Die Trennung an den Solltrennstellen kann je nach Art der Solltrennstellen z.B. durch einfaches Abziehen der Trägerfolie, durch Ziehen oder durch Einbringen von Wärme oder Strahlung, insbesondere Laserstrahlung, erreicht werden, sodass eine Schneidevorrichtung, insbesondere eine solche mit mechanischen Schneiden, eingespart werden kann.

Das erfindungsgemäße Verfahren kann auch so ausgeführt werden, dass an mindestens einer der Applikationsstationen für das Ablegen des Bandes oder mindestens eines der Bänder das zugehörige Bandmaterial mit jeweils einem Andruckelement einer Ablegeeinheit gegen die Basiseinheit gedrückt wird. Dies erfolgt vorzugsweise mittels mindestens einer stationären Ablegeeinheit, unter der die Basiseinheit durchgeführt wird.

Es kann auch vorgesehen werden, dass zeitlich vor dem Drücken des Bandmaterials gegen die Basiseinheit aus einem in Druckrichtung des Andruckelements vom Andruckelement beabstandeten Bereich heraus auf das Bandmaterial eingewirkt wird, insbesondere das Bandmaterial vor Kontakt mit der Basiseinheit an dem betroffenen Andruckelement vorpositioniert, vorbehandelt, insbesondere vorgewärmt, und/oder angeheftet wird. Im Falle einer Förderung der Basiseinheiten auf einer im Schwerefeld horizontalen Förderebene erfolgt das Einwirken auf das Bandmaterial somit aus einem Bereich unterhalb der Förderebene heraus. Hierzu ist die Fördereinrichtung zumindest zeitweise entsprechend offen im Bereich des jeweiligen Andruckelements zu gestalten. Das Vorbehandeln kann z.B. auch das Aufbringen eines Klebers sein. Sofern ein Anheften gewünscht ist, soll dies möglichst derart erfolgen, dass beim Kontakt des Andruckelements mit der von der Fördereinrichtung geförderten Basiseinheit der Anfang des Bandmaterialstückes genau an der Stelle die Basiseinheit kontaktiert, an der nach dem vorbestimmten Ablegemuster das abzulegende Band beginnen soll. Somit können nachträgliche Schneid- oder Entfernungsprozesse vermieden werden.

Das erfindungsgemäße Verfahren kann auch so ausgeführt werden, dass das Andruckelement mittels eines durch das Andruckelement, beispielsweise eine Andruckrolle, fließenden Kühlfluids gekühlt wird. Das Andruckelement kann auch als beispielsweise als Andruckraupe oder Gleitschuh ausgebildet sein. Mit der Kühlung ist ein wirksamer Schutz für das Material des betroffenen Andruckelements gegeben.

Die erfindungsgemäße Vorrichtung kann dabei in vorteilhafter Weise derart ausgebildet sein, dass mindestens ein an der Ablegeeinheit oder an einer der Ablegeeinheiten angeordnetes Andruckelement mittels eines Kühlfluids gekühlt ist, wobei das Andruckelement eine an einer in einer Rollenhalterung fixierten feststehenden Achse gelagerte Andruckrolle ist, wobei die Andruckrolle ein für den Kontakt mit dem Bandmaterial vorgesehenes Mantelelement umfasst und mindestens ein Teil einer Kühlfluidleitung zwischen der Achse und dem Mantelelement verläuft oder durch mindestens eine zwischen Mantelelement und Achse angeordnete Kammer gebildet ist. Dabei kann es besonders vorteilhaft sein, wenn die Lagerung der Andruckrolle innerhalb einer Nutzbreite der Andruckrolle angeordnet ist. Zudem kann das Kühlfluid über die Rollenhalterung direkt in die feststehende Achse geführt werden, so dass eine inhärente Drehdurchführung gegeben ist. Für die Führung des Kühlfluids benötigte Dichtungen können somit ebenfalls innerhalb der Nutzbreite der Andruckrolle angeordnet sein.

Durch diese Anordnung ist es möglich, einander benachbarte Ablegeeinheiten so dicht aneinander anzuordnen, dass die Bänder mit nur geringem seitlichem Abstand zueinander gleichzeitig abgelegt werden können. Dabei kann auch vorgesehen werden, dass die Zuführung des Kühlfluids durch die Rollenhalterung, z.B. durch Arme eines Hebelelements, erfolgt, so dass keine gesonderten, die Breite des Ablegeeinheit vergrößernden Zuführungselemente, wie z.B. eine Drehdurchführung außerhalb der Nutzbreite, erforderlich sind.

Das erfindungsgemäße Verfahren kann auch so ausgeführt werden, dass mindestens zwei Basiseinheiten gleichzeitig in der Fördereinrichtung gefördert und die mindestens zwei Basiseinheiten nacheinander durch mindestens zwei Applikationsstationen geführt werden, wobei vorzugsweise an mindestens zwei der Applikationsstationen unterschiedliche Ablegemuster für das Band oder die Bänder vorgesehen sind. Vorzugsweise befindet sich zu einem bestimmten Zeitpunkt eine Vielzahl von Basiseinheiten in der Fördereinrichtung und durchlaufen allesamt nacheinander die Applikationsstationen. Die Ablegemuster in den Applikationsstationen werden vorzugsweise allein durch die feste Position der mindestens einen darin befindlichen Ablegeeinheit und den Maßen des jeweils abgelegten Bandmaterials vorgegeben. Die Orientierung des in einer bestimmten Applikationsstation vorgesehenen Ablegemusters auf der Basiseinheit ist durch die Ausrichtung der Basiseinheit im Raum und damit relativ zur Applikationsstation sowie die Förderrichtung vorgegeben und kann durch eine mit der Ausrichtungseinheit mögliche Ausrichtungsänderung beeinflusst werden.

Die Ablegemuster können dabei in den Applikationsstationen derart geplant werden, dass sämtliche in den Applikationsstationen vorhandenen Ablegeeinheiten beim Durchlauf einer Basiseinheit an der Bandablage beteiligt sind. Zusätzlich kann eine Taktung in der Förderung der Basiseinheiten eingestellt werden, mit der zu jedem Zeitpunkt in oder vor der Applikationsstation mindestens eine Basiseinheit vorliegt, so dass eine optimierte Auslastung der Ablegeeinheiten und damit der Stillstandzeiten der Ablegeeinheiten erreicht werden kann.

Die Aufteilung der Ablegeeinheiten auf eine Mehrzahl von Applikationsstationen hat zudem den Vorteil, dass die Ablage unterschiedlich breiter Bänder erleichtert wird, insbesondere in verschiedenen Bandlagen. Die Ablage von breiteren Bändern kann die Kosteneffektivität des Produktionsverfahrens erhöhen. Andererseits können sehr kleine Bandablegebreiten die Verschnitte am Werkstückrand minimieren. Unterschiedliche Bandablegebreiten vorzusehen wäre zum Beispiel in dem Stand der Technik, der einen rotierbaren Ablegetisch zum Verfahren unterhalb einer einzigen Applikationsstation vorsieht, problematisch.

Insgesamt kann ein hoher Werkstück-Durchsatz bei verhältnismäßig geringen Investitions- und Betriebskosten erreicht werden. Zudem können in den vorzugsweise fest im Raum installierten Applikationsstationen die Ablegeeinheiten und die Mittel zur Bandzuführung leicht austauschbar gestaltet werden, womit das jeweilige Ablegemuster einfach veränderbar ist. Auftragsspezifische Konfigurationen sind somit leicht realisierbar.

Die erfindungsgemäße Vorrichtung kann auch so ausgebildet sein, dass die Applikationsstation oder mindestens eine der Applikationsstationen mindestens zwei im Produktionsprozess stationäre Ablegeeinheiten aufweist, wobei Ablegeorte der Ablegeeinheiten in Förderrichtung mit Abstand zueinander angeordnet sind. Stationär bedeutet, dass die Ablegeeinheit in ihrer Position relativ zur Applikationsstation nicht geändert wird. Der Abstand in Förderrichtung erleichtert oder ermöglicht erst den seitlichen, d.h. quer zur Förderrichtung benötigten Zugang für Reparatur, Wartung oder Austausch einer Ablegeeinheit oder von Teilen davon. Des Weiteren kann der Abstand in Förderrichtung derart gestaltet sein, dass die Abstände der Ablegeeinheiten in der Ablegefläche senkrecht zur Förderrichtung den Breiten der abzulegenden Bänder entsprechen. Das heißt, es kann in einem einzigen Durchgang eine zusammenhängende Fläche der abgelegten Bänder erreicht werden. Die Nutzbreiten benachbarter Ablegeeinheiten derselben Applikationseinheit können also unmittelbar aneinander anschließen.

Beispielhafte Ausführungsformen der erfindungsgemäßen Vorrichtung sowie des erfindungsgemäßen Verfahrens sind im Folgenden anhand von Figuren erläutert.

Es zeigt schematisch
- Fig. 1:: eine erste Produktionsvorrichtung mit einer Applikationsstation in Aufsicht,
- Fig. 2:: die Produktionsvorrichtung gemäß Fig. 1 in Seitenansicht,
- Fig. 3:: eine zweite Produktionsvorrichtung mit einer Mehrzahl von Applikationsstationen in Aufsicht,
- Fig. 4-9:: unterschiedliche Verteilungspläne für Ablegeorte einer Applikationsstation,
- Fig. 10:: eine prinzipielle Darstellung einer optimierten Belegung von Vorratsspulen,
- Fig. 11:: zwei Vorratsspulen mit aneinander zu fügenden Bändern,
- Fig. 12:: eine dritte Produktionsvorrichtung mit einer Temperiereinheit,
- Fig. 13:: eine Temperiereinheit,
- Fig. 14:: teilweise eine Ablegeeinheit mit Andruckrolle und anliegendem Band,
- Fig. 15:: eine Ablegeeinheit mit Vorratsspule und portioniertem Band,
- Fig. 16:: im Teilschnitt eine nur zum Teil dargestellte Ablegeeinheit mit fluidgekühlter Andruckrolle,
- Fig. 17:: eine Anordnung mehrerer Ablegeeinheiten an einem Haltegestell,
- Fig. 18.:: eine Ablegeeinheit an einem Haltegestell,
- Fig. 19:: ein Ablaufschema für ein Produktionsverfahren,
- Fig. 20:: eine Produktionsvorrichtung für das Ablaufschema nach Fig. 19;
- Fig. 21:: eine Basiseinheit und ein Halteelement in Seitenansicht und
- Fig. 22:: das Halteelement nach Fig. 21 in Aufsicht.

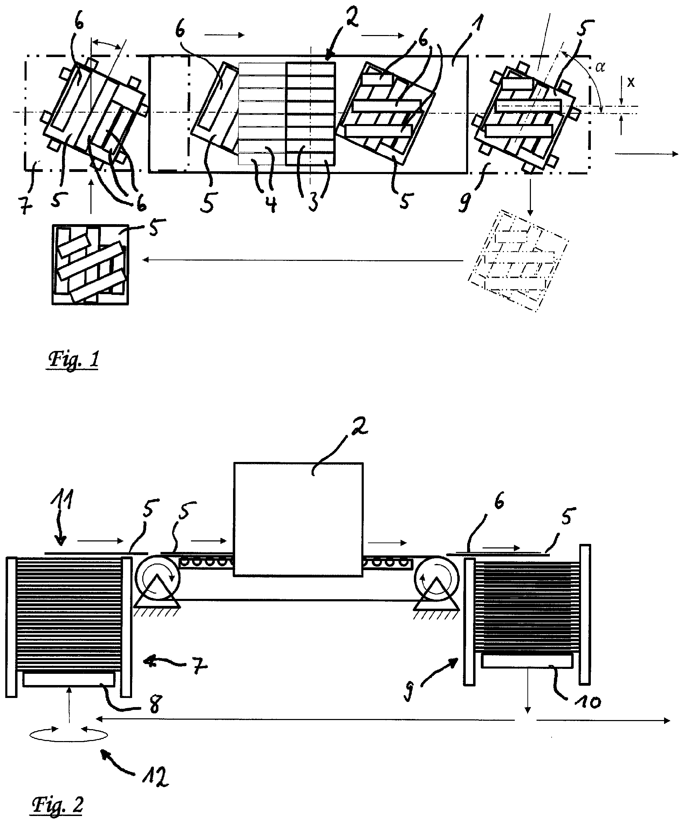

Fig. 1 zeigt schematisch in Aufsicht und Fig. 2 in Seitenansicht eine Förderteileinheit 1 einer hier nicht zur Gänze dargestellten Fördereinrichtung einer ersten Produktionsvorrichtung mit einer Applikationsstation 2. In der Aufsicht in Fig. 1 sind zur Applikationsstation 2 eine Vielzahl von Ablegeeinheiten 3 (lediglich zwei davon mit Bezugszeichen versehen) dargestellt, die von Vorratsspulen 4 (lediglich zwei davon mit Bezugszeichen versehen) mit hier nicht dargestelltem Bandmaterial versorgt werden. Es sind mehrere Basiseinheiten 5 in verschiedenen Phasen der Bearbeitung dargestellt. In Fig. 1 oben links befindet sich die Basiseinheit 5 mit bereits aufgebrachten Bändern 6 verschiedener Länge einer ersten Ablageschicht in einer ersten Stapelvorrichtung 7. In der Seitenansicht in Fig. 2 sind die Basiseinheiten 5 vor dem Eintreten in die Applikationsstation 2 noch nicht mit Bändern 6 versehen. Lediglich rechts von der Applikationsstation 2 ist ein Band 6 einer ersten Ablageschicht angedeutet. Die Stapelvorrichtung 7 erlaubt die Aufnahme eines Stapels von Basiseinheiten 5 auf einem ersten Trägerelement 8.

Die erste Stapelvorrichtung 7 weist zudem eine hier nur durch Pfeile symbolisierte Rotationseinrichtung 12 auf, mit der das Trägerelement 8 und damit der gesamte Stapel der Basiseinheiten 5 gedreht werden kann, um dem Stapel und damit der zuoberst liegenden Basiseinheit 5 eine bestimmte Ausrichtung vor dem Eintritt in die Applikationsstation 2 zu geben. Somit dient die erste Stapelvorrichtung 7 gleichzeitig als Ausrichtungseinheit 11. Nach Verlassen der Applikationsstation 2 wird die Basiseinheit 5 einer zweiten Stapelvorrichtung 9 zugeführt, in der wiederum die Basiseinheiten 5 in einem Stapel auf einem zweiten Trägerelement 10 aufgenommen werden können.

Nach dem Verlassen der Applikationsstation 2 können die Basiseinheiten 5 von der zweiten Stapelvorrichtung 9 mit einer hier nicht dargestellten zweiten Förderteileinheit erneut zur ersten Stapelvorrichtung 7 zurückgeführt werden, um nach ggf. geänderter Ausrichtung erneut in der Applikationsstation 2 mit Bändern 6 belegt zu werden. Dementsprechend zeigen die Basiseinheiten 5 rechts von der Applikationsstation 2 in Fig. 1 bereits Bänder 6 einer zweiten Ablageschicht. Dieser Zyklus kann bei Bedarf beliebig oft durchgeführt werden. Dabei wird der Transport von der zweiten Stapelvorrichtung 9 zur ersten Stapelvorrichtung 7 vorzugsweise automatisiert mittels der nicht weiter im Detail dargestellten Fördereinrichtung vollzogen.

Von der zweiten Stapelvorrichtung 9 aus können die Basiseinheiten 5 jedoch auch weiteren Anwendungen, d. h. einer weiteren, in den Fig. 1 und 2 nicht dargestellten Applikationsstation oder sonstigen Maßnahmen, wie zum Beispiel einem Zuschneiden oder Temperieren zugeführt werden.

Die Stapelvorrichtungen 7 oder 9 für die Basiseinheiten 5 haben den Vorteil, dass sie als Puffer im Produktionsablauf genutzt werden können. Grundsätzlich kann die Ausrichtung der Basiseinheiten 5 vor dem Eintreten in die Applikationsstation 2 jedoch an den Basiseinheiten 5 auch jeweils einzeln durch hier nicht dargestellte anderweitige Ausrichtungsmaßnahmen erfolgen. Eine Stapelung ist nicht erforderlich.

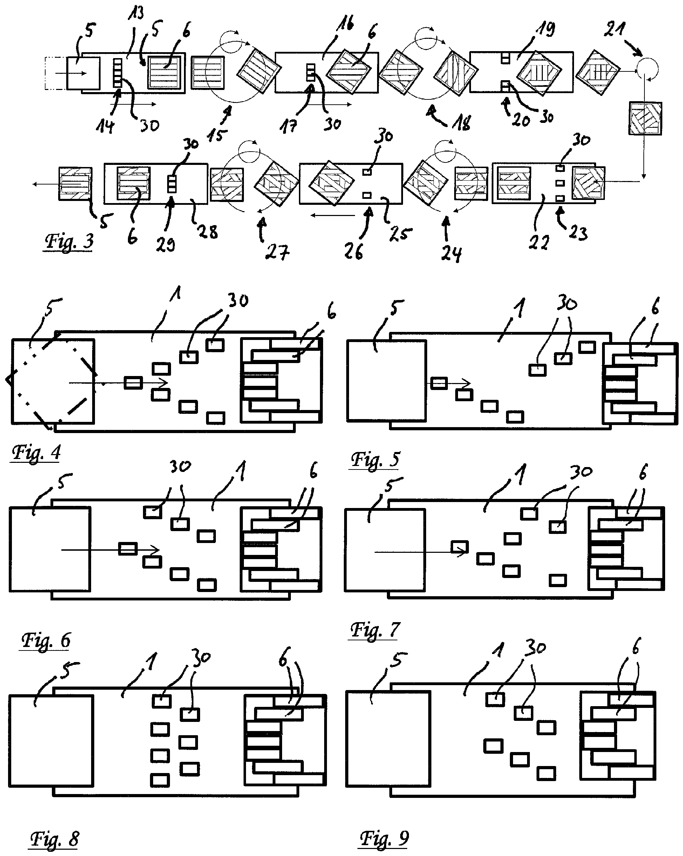

Fig. 3 zeigt in Aufsicht eine als Produktionslinie ausgestaltete zweite Produktionsvorrichtung in Aufsicht und zeigt die Belegung einer Basiseinheit 5 mit mehreren Schichten von Bändern 6. Die noch nicht mit Bändern 6 belegte Basiseinheit 5 (links oben im Bild) wird mittels einer ersten Förderteileinheit 13 durch eine erste Applikationsstation 14 geführt und dort mit einer ersten Ablageschicht von Bändern 6 belegt. Anschließend wird die Basiseinheit 5 in einer lediglich durch Rotationspfeile symbolisierten ersten Ausrichtungseinheit 15 mit einer Rotationsachse senkrecht zur Förderebene um einen bestimmten Winkel gedreht. Mittels einer zweiten Förderteileinheit 16 wird die Basiseinheit 5 einer zweiten Applikationsstation 17 zugeführt und mit einer zweiten Ablageschicht von Bändern 6 versehen. Dieses Schema wird über eine zweite Ausrichtungseinheit 18, eine dritten Förderteileinheit 19, einer dritten Applikationsstation 20, einer dritten Ausrichtungseinheit 21, einem vierten Förderteileinheit 22 und einer vierten Applikationsstation 23, einer vierten Ausrichtungseinheit 24, einer fünften Förderteileinheit 25, einer fünften Applikationsstation 26, einer fünften Ausrichtungseinheit 27 und einer sechsten Förderteileinheit 28 mit einer sechsten Applikationsstation 29 weitergeführt, so dass letztendlich die Bänder 6 in sechs Ablageschichten auf der Basiseinheit 5 vorliegen.

Fig. 3 kann als Darstellung der Abfolge von Behandlungsschritten ein und derselben Basiseinheit 5 verstanden werden. Selbstverständlich stellt die schematische Darstellung gemäß Fig. 3 auch die Produktionsvorrichtung mit einer Vielzahl von Basiseinheiten 5 in den verschiedenen Stationen dar.

Gemäß der Darstellung in Fig. 3 weisen die verschiedenen Applikationsstationen 14, 17, 20, 23, 26 und 29 jeweils unterschiedliche Anordnungen von Ablegeorten 30 für die Bänder 6 auf, von denen jeweils nur eine mit einem Bezugszeichen versehen ist. Als Ablegeort 30 wird der Ort verstanden, an dem das Bandmaterial mittels einer hier noch nicht dargestellten Andruckrolle auf die Basiseinheit 5 gedrückt wird. Mit der unterschiedlichen Verteilung der Ablegeorte 30 weist jede Ablageschicht in der zweiten Produktionsvorrichtung nach Fig. 3 ein anderes Ablegemuster der abgelegten Bänder 6 auf.

Es kann aber auch gewünscht sein, dass die in einer Applikationsstation abzulegenden Bänder zumindest zum Teil mit ihren Rändern aneinanderstoßen, sodass sich eine geschlossene Schicht ergibt, die die Breite der einzelnen Bänder übersteigt. Die Fig. 4 bis 9 zeigen unterschiedliche Anordnungsmöglichkeiten von Ablegeorten 30 auf der jeweiligen Förderteileinheit 1, von denen der besseren Übersichtlichkeit halber lediglich zwei in den Figuren mit Bezugszeichen versehen sind. Links in den Figuren ist jeweils eine Basiseinheit 5 gezeigt, in Fig. 4 gestrichelt auch in einer vorherigen Ausrichtung. Am rechten Ende der Förderteileinheit 1 ist jeweils die Basiseinheit 5 mit an den Ablegeorten 30 aufgebrachten Bändern 6 (nur zwei der sieben Bänder mit Bezugszeichen) dargestellt.

Durch den Versatz der Ablegeorte 30 sowohl in Förderrichtung können die hier nicht dargestellten zugehörigen Ablegeeinheiten breiter gestaltet werden als die Breite des abzulegenden Bandes, was erhebliche Erleichterungen hinsichtlich der Konstruktion der Ablegeeinheiten hat.

Des Weiteren ermöglicht die versetzte Anordnung von Ablegeorten 30 einen seitlichen Zugang zu den Ablegeeinheiten 3 (in den Fig. 4 bis 9 nicht dargestellt), z.B. zum Zwecke der Wartung, der Reparatur oder des Austauschs.

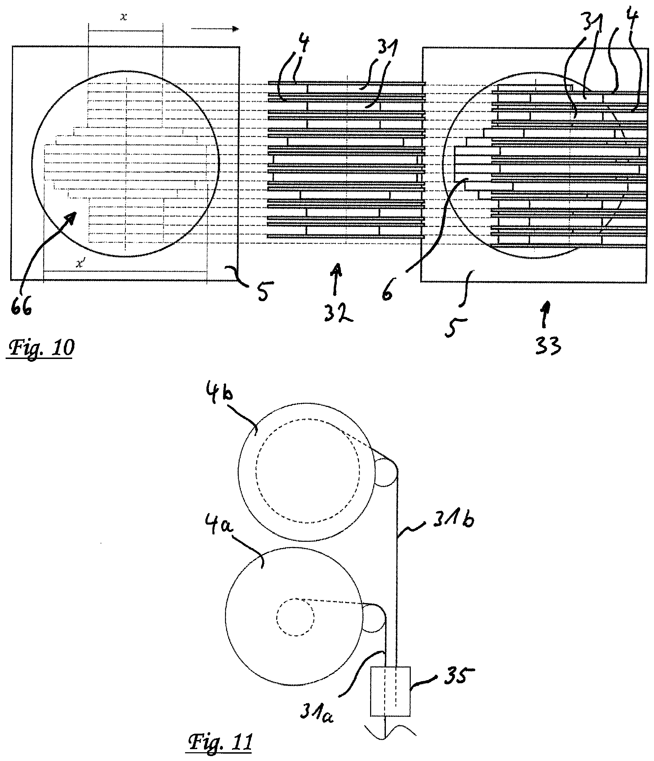

Fig. 10 zeigt schematisch auf der linken Seite eine Basiseinheit 5 und darauf gestrichelt ein Ablegemuster 66 von abzulegenden Bändern 6, wie es rechts in der Abbildung der Basiseinheiten nach Ablegen der Bänder 6 verwirklicht ist. Das Ablegemuster 66 ist keine quadratische Fläche, sondern sieht Bereiche mit Bändern 6 unterschiedlicher Länge (z.B. x und x') vor. Um die Bänder 6 aneinander anstoßend ablegen zu können, sind versetzt zueinander angeordnete Ablegeorte 30 (in Fig. 10 nicht dargestellt) vorgesehen, ähnlich der Anordnung in Fig. 8. Zu jedem Ablegeort 30 gehört jeweils eine in Fig. 10 nicht dargestellte Ablegeeinheit, die mittels Vorratsspulen 4 mit Bandmaterial 31 versorgt werden. Eine Vielzahl von Vorratsspulen 4 ist in einer ersten Spulenreihe 32 und einer zweiten Spulenreihe 33 jeweils nebeneinander angeordnet. Entsprechend den versetzt zueinander vorgesehenen Ablegeorten (vergleiche Ablegeorte 30 in Fig. 8) für das Bandmaterial 31 sind auch die Vorratsspulen 4 in den beiden Spulenreihen 32 und 33 versetzt zueinander angeordnet. Auf diese Weise wird eine dichte Ablageschicht mit aneinanderstoßenden Bändern 6 erreicht.

Die Vorratsspulen 4 weisen unterschiedliche Mengen von Bandmaterial 31 auf. So ist die Menge an Bandmaterial 31 in den mittleren Vorratsspulen 4 der Spulenreihen 32 und 33 wesentlich höher als in den am jeweiligen Rand angeordneten Vorratsspulen 4. Dabei ist die Menge des in den Vorratsspulen 4 vorhandenen Bandmaterials 31 jeweils an das abzulegende Bandmuster angepasst und so gewählt, dass bei planmäßigem Ablegen der Bänder 6 die Vorräte des Bandmaterials 31 in sämtlichen Spulen 4 gleichzeitig zu Ende gehen. Dies hat den Vorteil, dass die Vorratsspulen 4 allesamt gleichzeitig ausgetauscht werden können, ohne dass in einer der Spulen 4 noch nennenswerte Reste an Bandmaterial 31 verbleiben.

Um einen Austausch von Vorratsspulen 4 durchführen zu können, ohne den Produktionsprozess unterbrechen zu müssen oder die Unterbrechung möglichst gering halten zu können, kann das Bandmaterial 31 zweier verschiedener Vorratsspulen 4 mit dem in Fig. 11 dargestellten Verfahren aneinandergefügt werden. Fig. 11 zeigt eine erste Vorratsspule 4a, deren Vorrat an Bandmaterial 31a zu Ende geht. Oberhalb der ersten Vorratsspule 4a ist eine zweite Vorratsspule 4b angeordnet, dessen Vorrat an Bandmaterial 31b noch vollständig ist. Über Umlenkrollen 34a bzw. 34b wird das jeweilige Bandmaterial 31a bzw. 31b einer Fügeeinrichtung 35 zugeführt, in der die Bandmaterialien 31a und 31b aneinandergefügt werden. Eine beim Fügen eventuell entstehende Verdickung des Bandmaterials kann beim Ablegevorgang abgeschnitten oder vernachlässigt werden. Ausgehend von der in Fig. 10 dargestellten Variante kann der Austausch der Vorratsspulen 4 für die sämtliche Spulen 4 der Spulenreihe 32 oder 33 durchgeführt werden, da die Spulen 4 der Spulenreihen 32 oder 33 weitgehend gleichzeitig aufgebraucht sind.

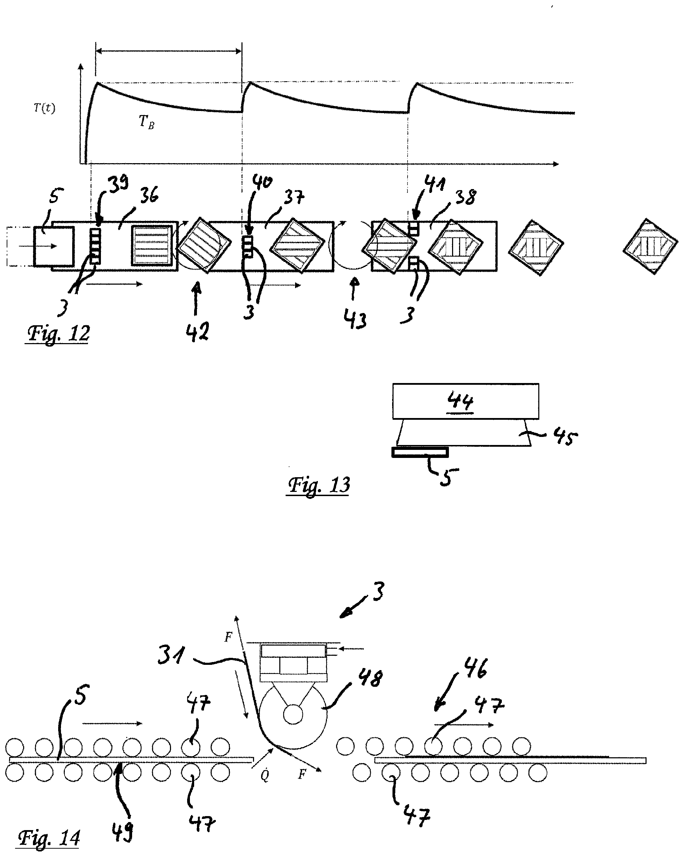

Fig. 12 zeigt schematisch eine dritte Produktionsvorrichtung mit drei Förderteileinheiten 36, 37, 38 mit jeweils einer Applikationsstation 39, 40, 41 mit unterschiedlichen Anordnungen der Ablegeeinheiten 3. Zwischen den Förderteileinheiten 36, 37, 38 sind jeweils eine Ausrichtungseinheit 42 und 43 zum Ausrichten der Basiseinheiten 5 angeordnet, die lediglich durch Rotationspfeile symbolisiert sind. Zwischen den Applikationsstationen 39, 40 und 41 ist oberhalb der Förderebene jeweils eine Temperieranordnung 44 vorgesehen (in Fig. 12 nicht dargestellt), sodass auf dem Förderweg zwischen den Applikationsstationen 39, 40 und 41 die Temperatur der Basiseinheit 5 nur gering absinkt. Eine der Temperieranordnungen 44, die mittels Wärmestrahlung 45, z.B. Infrarotlicht, auf die Basiseinheit 5 wirkt, ist schematisch in Fig. 13 gezeigt. Andere Heizvarianten sind ebenfalls möglich, wie z.B. induktive Beheizung oder Widerstandsbeheizung eines Trägerteils der Basiseinheit 5, Heißgas oder eine photonische Heizquelle. Somit kann in der jeweils nachfolgenden Applikationsstation, zum Beispiel 40 oder 41, die für das notwendige Aufheizen benötigte Zeit gering gehalten werden. Oberhalb der dritten Produktionsvorrichtung ist ein Diagramm mit einem beispielhaften Verlauf der Temperatur T_{B} in der Basiseinheit 5 ohne Einwirkung von einer oder mehreren Temperieranordnungen 44 mit durchgezogener Linie und unter Einfluss der Temperierung mit gestrichelter Linie idealisiert dargestellt.

Fig. 14 zeigt schematisch eine Förderteileinheit 46 mit daran mittels Förderrollen 47 geförderten Basiseinheiten 5. Einer Andruckrolle 48 einer hier nicht zur Gänze gezeigten Ablegeeinheiten 3 wird Bandmaterial 31 zugeführt, welches zur Ablage auf die von links ankommende Basiseinheit 5 vorgesehen ist. Die Andruckrolle 48 ist von unterhalb der durch die Unterseite der Basiseinheit gegebenen Förderebene 49 zugänglich, um einen Wärmeeintrag dQ/dt auf das an der Andruckrolle 48 anliegende Bandmaterial 31 zu ermöglichen und zudem das Bandmaterial 31 an die Andruckrolle 48 anzulegen. Das Anlegen des Bandmaterials 31 erfolgt vorzugsweise gezielt an einer Stelle der Andruckrolle 48, die beim Abrollen der Andruckrolle 48 mit dem Anfangspunkt der gewünschten Bandablage auf der Basiseinheit 5 zusammenkommt. Zum Anlegen des Bandmaterials 31 an die Andruckrolle 48 kann ein hier nicht dargestelltes Anpresselement genutzt werden.

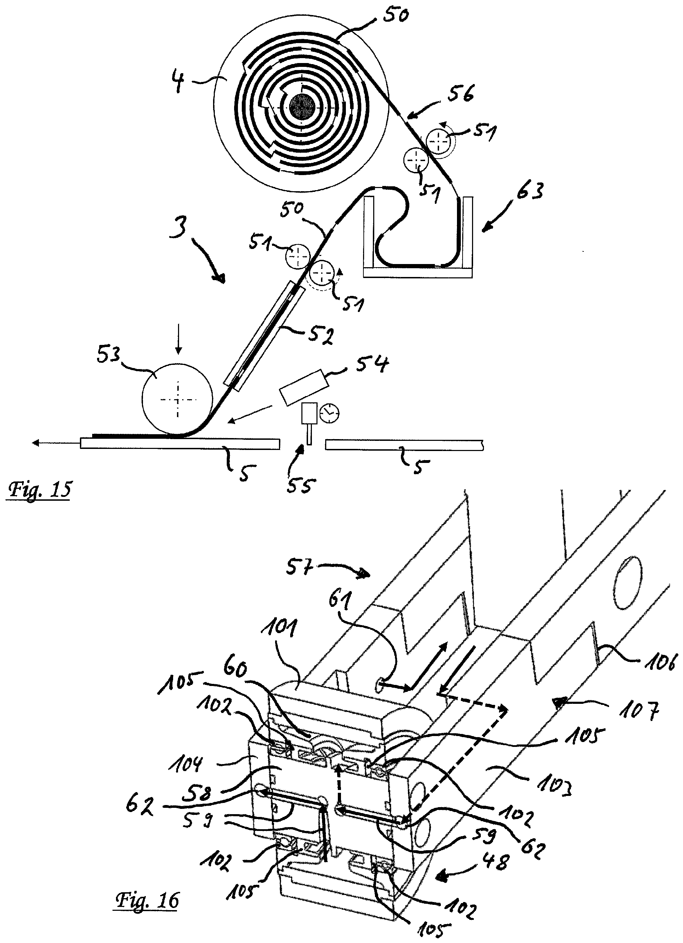

Fig. 15 stellt schematisch eine Ablegeeinheit 3 dar, welche von einer Vorratsspule 4 mit Bandmaterial 50 versorgt wird. Die Förderung des Bandmaterials 50 erfolgt mittels Paaren von Antriebsrollen 51, von denen vorzugsweise nur jeweils eine aktiv angetrieben ist, über eine Führungseinheit 52 zu einer Andruckrolle 53, welche das Bandmaterial 50 auf die in Förderrichtung vordere der beiden dargestellten Basiseinheiten 5 ablegt. Das Bandmaterial 50 wird mittels einer photonischen Heizeinheit 54, zum Beispiel einem Laser, unmittelbar vor dem Ablegen aufgeheizt. Zur Andruckrolle 53 geförderte Basiseinheiten 5 werden mit einem Näherungssensor 55 detektiert, der des Weiteren zur Steuerung der Andruckkraft (durch Pfeil symbolisiert) der Andruckrolle 53 auf die Basiseinheit 5, zum Beispiel über einen hier nicht dargestellten pneumatischen Zylinder, und/oder zur Steuerung der Heizeinheit 54 dienen kann. Die Andruckrolle 53 ist an ihrem Umfang elastisch ausgebildet, um Oberflächenunregelmäßigkeiten an der Basiseinheit 5 ausgleichen zu können.

Die Führung des Bandmaterials 50 erfolgt über einen Pufferbereich 63, der den Vortrieb des Bandmaterials 50 zur Andruckrolle 53 hin von der Massenträgheit der Vorratsspule 4 entkoppelt.

Das Bandmaterial 50 ist in Bandmaterialstücke vorgeschnitten, die an Solltrennstellen bildenden Kontaktstellen 56 locker, zum Beispiel mittels eines Binders, der unterhalb der Schmelztemperatur der Kunststoffmatrix des Bandmaterials 50 schmilzt, aneinandergefügt sind. Andere Mechanismen, zum Beispiel eine Perforation, das Aufliegen der Bandmaterialstücke auf einem Trägermaterial oder die Verbindung der Bandmaterialstücke mittels leicht lösbarer Verbindungselemente sind ebenfalls denkbar. Auf diese Weise kann der Aufwand für einen Schneideprozess innerhalb der Ablegeeinheit 3 vermieden werden. Die Trennung der Bandmaterialstücke voneinander kann auch mittels der photonischen Heizeinheit 54 erfolgen

Fig. 16 zeigt teils perspektivisch, teils geschnitten eine an einem schwenkbaren Hebelelement 57 zwischen zwei Hebelarmstücken 103 und 104 angeordnete Andruckrolle 48 mit einem für den Kontakt mit abzulegendem Bandmaterial vorgesehenen Mantelelement 101. Die Andruckrolle 48 ist an einer an den Hebelarmstücken 103 und 104 feststehenden Achse 58 mit Lagern 102 gelagert. In Fig. 16 ist ein Kugellager angedeutet. Andere Lagerarten, wie Rollenlager oder Gleitlager, sind natürlich ebenfalls möglich. Die Anordnung der Lager 102 innerhalb einer durch die Breite des Mantelelements 101 vorgegebenen Nutzbreite der Andruckrolle 48, im hier dargestellten Beispiel der Fig. 16 also zwischen den Hebelarmstücken 103 und 104, führt dazu, dass durch die Lager 102 die Breite des Hebelelements 57 nicht vergrößert wird, wodurch eine kompaktere Bauweise mit benachbarten Ablegeeinheiten möglich ist.

Die feststehende Achse 58 weist Bohrungen 59 auf, durch die ein Kühlfluid in eine um die Achse 58 umlaufende Kammer 60 geführt werden kann. Die Kammer 60 ist durch Dichtungen 105 gegenüber den Lagern 102 abgedichtet. Das Kühlfluid, dessen Lauf durch Pfeile symbolisiert ist, kann über einen am Hebelarmstück 103 angeordneten Eintritt (hier nicht sichtbar) eingespeist werden und über Hebelarm-Bohrungen 62 zur statischen Achse 58 geführt werden. Über einen Austritt 61 am Hebelarmstück 104 verlässt das Kühlfluid das Hebelelement 57. Ein Vorderteil 107 des Hebelelements 57 kann aufgrund einer Teilung 106 mitsamt der Andruckrolle 48 Zum Zwecke der Reparatur, Wartung oder des Austauschs entfernt werden.

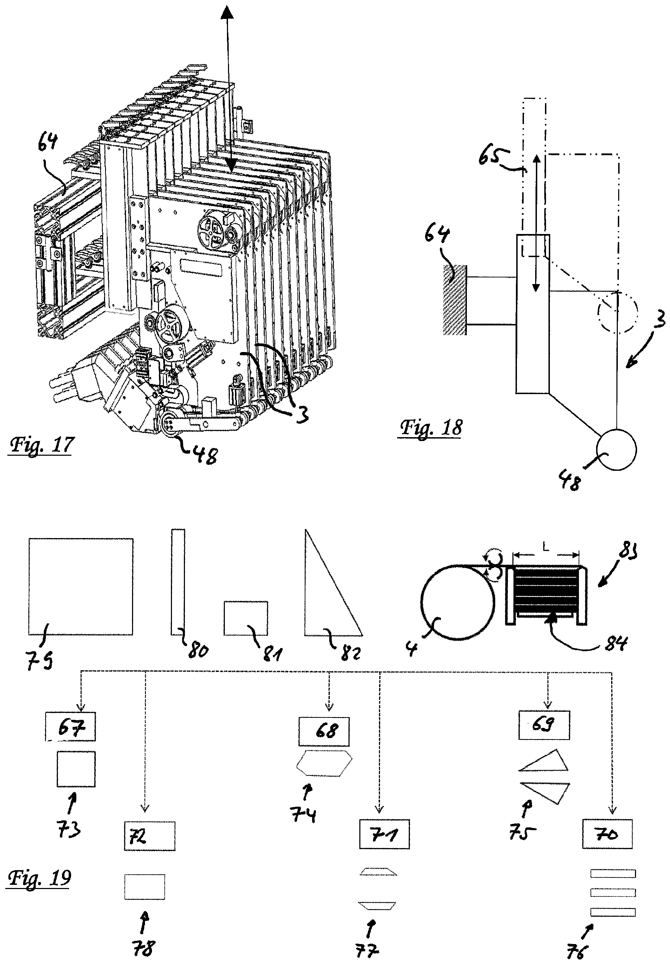

Fig. 17 zeigt eine parallele Anordnung von mehreren, an einem Haltegestell 64 gehaltenen Ablegeeinheiten 3 mit jeweils einer Andruckrolle 48 in einer perspektivischen Ansicht. Eine derartige Anordnung kann in einer Applikationsstation vorgesehen sein. Auf die grundsätzlich aus dem Stand der Technik bekannten einzelnen, in Fig. 17 zu sehenden Elemente der Ablegeeinheiten 3 soll hier nicht näher eingegangen werden. Fig. 18 zeigt lediglich schematisch in Seitenansicht eine der Ablegeeinheiten 3 an dem Haltegestell 64. Die Ablegeeinheit 3 ist an einer verfahrbaren Schiene 65 angeordnet, die ein motorgetriebenes oder manuelles Verfahren der Ablegeeinheit 3 relativ zum Haltegestell 64 nach oben oder unten erlaubt. Dies erleichtert eventuell notwendige Wartung- oder Reparaturarbeiten sowie einen Austausch der Ablegeeinheit 3. Für die bessere Zugänglichkeit der einzelnen Ablegeeinheit 3 käme alternativ zum Auf- und Abbewegen eine Schwenkbewegung um eine am Haltegestell 64 angeordnete und hier nicht dargestellte Schwenkachse in Frage

Fig. 19 zeigt schematisch den Ablauf eines Beispiels des erfindungsgemäßen Verfahrens. In Applikationsstationen 67 bis 72 werden unterschiedliche Ablegemuster 73 bis 78 abgelegt. Hierfür sind in jeder Applikationsstation 67 bis 72 unterschiedliche Anordnungen von hier nicht dargestellten Ablegeeinheiten oder nur eine einzelne Ablegeeinheit vorgesehen und zwar derart, dass bei jedem Durchgang von hier ebenfalls nicht dargestellten Basiseinheiten jede der Ablegeeinheiten tätig wird, so dass eine optimierte Auslastung der Ablegeeinheiten gegeben ist. So kann in Applikationsstation 67 eine einzige Ablegeeinheit vorgesehen sein, die ein sehr breites Band ablegt, wie dies durch das Bandstück 79 symbolisiert ist. Bandstück 80 ist hingegen schmal und steht für abzulegende Bänder in Applikationsstation 70 für das Muster 76. Bänder gemäß dem Bandmuster 81 könnten in Applikationsstation 72 abgelegt werden.

Auch dreieckige Bandstrukturen, wie durch Bandmuster 82 gezeigt, können genutzt werden, z.B. in Applikationsstation 69 für das Ablegemuster 75. Dreieckige oder in anderer Weise geformte Bandmuster 82 können grundsätzlich als Endlosmaterial zugeführt werden, z.B. auf einem Trägermaterial. Sämtliche Bandmuster können aber auch als fertig zugeschnittene Bandstücke den Ablegeeinheiten zugeführt werden, so z.B. über ein Magazin 83, das die zugeschnittenen Bandstücke (dort im Stapel 84 vorliegend) von einer Vorratsspule 4 und ggf. über eine hier nicht dargestellte Zuschneide-Stelle erhält.

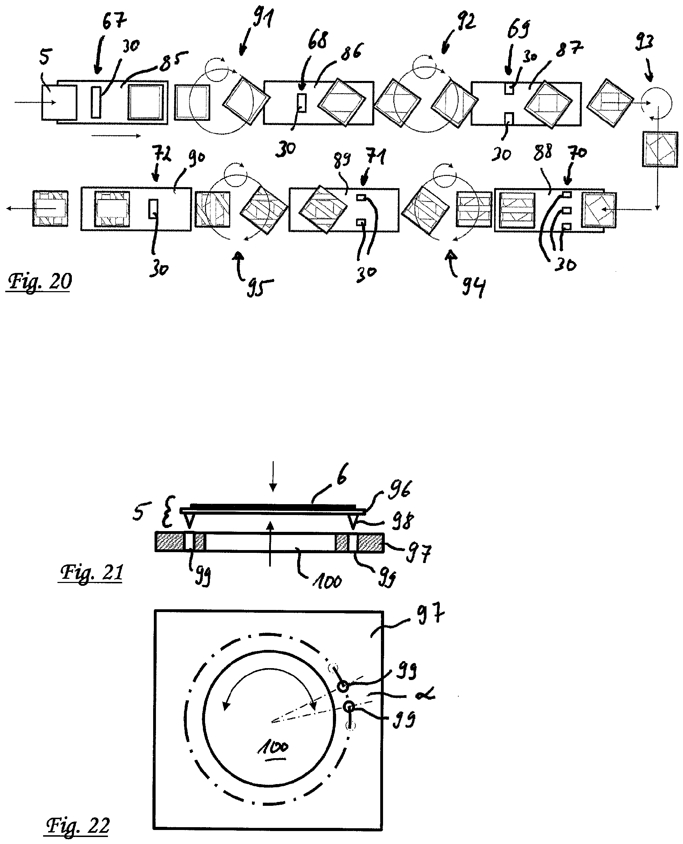

Fig. 20 zeigt das in Fig. 19 dargestellte Verfahren mit Aufsicht auf die zugehörige Produktionsvorrichtung. Von links kommend durchlaufen die Basiseinheiten 5 die Applikationsstationen 67 bis 72 mit den zugehörigen Förderteileinheiten und Ausrichtungseinheiten 91 bis 95. Die in der jeweiligen Lage der Bänder an den Ablegeorten 30 aufgelegten Ablegemuster entsprechen im Wesentlichen den Ablegemustern 73 bis 78 der Fig. 19.

Fig. 21 und Fig. 22 zeigen schließlich eine Grund-Basiseinheit 96 mit einem darauf abgelegten Band 6 sowie ein Halteelement 97 für die Grund-Basiseinheit 96. Grund-Basiseinheit 96 und Band 6 bilden zusammen eine Basiseinheit 5 im Sinne der Erfindung. Die Grund-Basiseinheit 96 weist Einrastmittel 98, hier beispielhaft in Form von Dornen, auf, die in Bohrungen 99 des Halteelements 97 eingreifen. Benachbarte Bohrungen 99, von denen in Fig. 22 lediglich zwei deutlich dargestellt sind, die sich jedoch im Kreis gleichmäßig verteilen, bilden mit dem Mittelpunkt des Halteelements 97 einen Winkel α, um den die Grund-Basiseinheit 96 im Halteelement 97 versetzt einrasten kann. Das Halteelement 97 weist eine zentrale Bohrung 100 auf, durch die hier nicht gezeigte Ausrichtmittel einer Ausrichteinheit auf die Grund-Basiseinheit 96 zugreifen können, um eine Ausrichtungsänderung durchführen zu können.

**Bezugszeichenliste**

| | | | |
|---|---|---|---|
| 1 | Förderteileinheit | 32 | Erste Spulenreihe |
| 2 | Applikationsstation | 33 | Zweite Spulenreihe |
| 3 | Ablegeeinheit | 34 | Umlenkrollen |
| 4 | Vorratsspule | 35 | Fügeeinrichtung |
| 5 | Basiseinheit | 36 | Förderteileinheit |
| 6 | Band | 37 | Förderteileinheit |
| 7 | Erste Stapelvorrichtung | 38 | Förderteileinheit |
| 8 | Erstes Trägerelement | 39 | Applikationsstation |
| 9 | Zweite Stapelvorrichtung | 40 | Applikationsstation |
| 10 | Zweites Trägerelement | 41 | Applikationsstation |
| 11 | Ausrichtungseinheit | 42 | Ausrichtungseinheit |
| 12 | Rotationseinrichtung | 43 | Ausrichtungseinheit |
| 13 | Erste Förderteileinheit | 44 | Temperieranordnung |
| 14 | Erste Applikationsstation | 45 | Wärmestrahlung |
| 15 | Erste Ausrichtungseinheit | 46 | Förderteileinheit |
| 16 | Zweite Förderteileinheit | 47 | Förderrollen |
| 17 | Zweite Applikationsstation | 48 | Andruckrolle |
| 18 | Zweite Ausrichtungseinheit | 49 | Förderebene |
| 19 | Dritte Förderteileinheit | 50 | Bandmaterial |
| 20 | Dritte Applikationsstation | 51 | Antriebsrolle |
| 21 | Dritter Ausrichtungseinheit | 52 | Führungseinheit |
| 22 | Vierte Förderteileinheit | 53 | Andruckrolle |
| 23 | Vierte Applikationsstation | 54 | Heizeinheit |
| 24 | Vierte Ausrichtungseinheit | 55 | Näherungssensor |
| 25 | Fünfte Förderteileinheit | 56 | Kontaktstelle |
| 26 | Fünfte Applikationsstation | 57 | Hebelelement |
| 27 | Fünfte Ausrichtungseinheit | 58 | Achse |
| 28 | Sechste Förderteileinheit | 59 | Bohrung |
| 29 | Sechste Applikationsstation | 60 | Kammer |
| 30 | Ablegeorte | 61 | Kühlfluidaustritt |
| 31 | Bandmaterial | 62 | Hebelarm-Bohrung |
| 63 | Pufferbereich | 95 | Ausrichtungseinheit |
| 64 | Haltegestell | 96 | Grund-Basiseinheit |
| 65 | Schiene | 97 | Halteelement |
| 66 | Ablegemuster | 98 | Einrastmittel |
| 67 | Applikationsstation | 99 | Bohrungen |
| 68 | Applikationsstation | 100 | Zentrale Bohrung |
| 69 | Applikationsstation | 101 | Mantelelement |
| 70 | Applikationsstation | 102 | Lager |
| 71 | Applikationsstation | 103 | Hebelarmstück |
| 72 | Applikationsstation | 104 | Hebelarmstück |
| 73 | Ablegemuster | 105 | Dichtung |
| 74 | Ablegemuster | 106 | Teilung |
| 75 | Ablegemuster | 107 | Vorderteil des Hebelelements |
| 76 | Ablegemuster | | |
| 77 | Ablegemuster | | |
| 78 | Ablegemuster | | |
| 79 | Bandmuster | | |
| 80 | Bandmuster | | |
| 81 | Bandmuster | | |
| 82 | Bandmuster | | |
| 83 | Magazin | | |
| 84 | Stapel | | |
| 85 | Förderteileinheit | | |
| 86 | Förderteileinheit | | |
| 87 | Förderteileinheit | | |
| 88 | Förderteileinheit | | |
| 89 | Förderteileinheit | | |
| 90 | Förderteileinheit | | |
| 91 | Ausrichtungseinheit | | |
| 92 | Ausrichtungseinheit | | |
| 93 | Ausrichtungseinheit | | |
| 94 | Ausrichtungseinheit | | |

## Patentansprüche

1. Verfahren zur Produktion von Faserverbundwerkstoff aufweisenden Werkstücken, bei dem
a) eine von Haltemitteln (97) einer Fördereinrichtung gehaltene Basiseinheit (5) durch mindestens eine Applikationsstation (2, 14, 17, 20, 23, 26, 29, 39-41, 67-72) geführt wird, und
b) zur Bildung der Werkstücke an der Applikationsstation (2, 14, 17, 20, 23, 26, 29, 39-41, 67-72) oder an mindestens einer der Applikationsstationen (2, 14, 17, 20, 23, 26, 29, 39-41, 67-72) während einer Translationsbewegung der Basiseinheit (5) durch die betroffene Applikationsstation (2, 14, 17, 20, 23, 26, 29, 39-41, 67-72) mindestens ein zum Faserverbundwerkstoff gehörendes Band (6) auf die Basiseinheit (5) abgelegt wird,
**dadurch gekennzeichnet, dass**
c) mittels mindestens einer in Förderrichtung vor der Applikationsstation (2, 14, 17, 20, 23, 26, 29, 39-41, 67-72) oder vor mindestens einer der Applikationsstationen (2, 14, 17, 20, 23, 26, 29, 39-41, 67-72) angeordneten Ausrichtungseinheit (11, 15, 18, 21, 24, 27, 42, 43, 91-95) die räumliche Ausrichtung der Basiseinheit (5) mittels mindestens einer Rotation relativ zu den Haltemitteln (97) geändert wird.

2. Verfahren nach Anspruch 1, **dadurch gekennzeichnet, dass** die Ausrichtungsänderung erfolgt, während die Basiseinheit (5) auf der Fördereinrichtung gefördert wird.

3. Verfahren nach Anspruch 1 oder 2, **dadurch gekennzeichnet, dass** eine erste aus mindestens einem Band (6) bestehende Schicht auf eine nicht zur Fördereinrichtung gehörende Grund-Basiseinheit (96) abgelegt wird.

4. Verfahren nach einem der vorherigen Ansprüche, **dadurch gekennzeichnet, dass** die mindestens eine Basiseinheit (5) in der Fördereinrichtung zumindest auch außerhalb der mindestens einen Applikationsstation (2, 14, 17, 20, 23, 26, 29, 39-41, 67-72) mit Wärme beaufschlagt wird.

5. Verfahren nach einem der vorherigen Ansprüche, **dadurch gekennzeichnet, dass** Bandmaterial (31, 50) zur Bildung des mindestens einen Bandes (6) in mindestens einem Vorratsbehälter (4) vorgehalten wird, wobei vorzugsweise
- an mindestens einer der Applikationsstationen (2, 14, 17, 20, 23, 26, 29, 39-41, 67-72) mindestens zwei der Vorratsbehälter (4) derart mit Bandmaterial (31, 50) bestückt werden, dass sie bei planmäßiger Bandablage mit vorgegebenem Ablegemuster (66) gleichzeitig oder zumindest in etwa gleichzeitig erschöpft sind, oder
- vor dem Austausch eines ersten der Vorratsbehälter (4) durch einen zweiten der Vorratsbehälter (4) das Bandmaterial (31, 50) des zweiten Vorratsbehälters (4) an das Bandmaterial (31, 50) des ersten Vorratsbehälters (4) gefügt wird.

6. Verfahren nach Anspruch 5, **dadurch gekennzeichnet, dass** durch das Einbringen von Solltrennstellen (56) zumindest eine Teilmenge des Bandmaterials (31, 50) in erleichtert voneinander trennbare Bandmaterialteilstücke aufgeteilt wird, deren jeweilige Länge exakt oder zumindest im Wesentlichen der Länge des damit zu bildenden Bandes (6) entspricht.

7. Verfahren nach einem der Ansprüche 5 oder 6, **dadurch gekennzeichnet, dass** an mindestens einer der Applikationsstationen (2, 14, 17, 20, 23, 26, 29, 39-41, 67-72) für das Ablegen des Bandes (6) oder mindestens eines der Bänder (6) das zugehörige Bandmaterial (31, 50) mit jeweils einem Andruckelement (48, 53) einer Ablegeeinheit (3) gegen die Basiseinheit (5) gedrückt wird, wobei vorzugsweise zeitlich vor dem Drücken des Bandmaterials (31, 50) gegen die Basiseinheit (5) aus einem in Druckrichtung des Andruckelements (48, 53) vom Andruckelement (48, 53) beabstandeten Bereich heraus auf das Bandmaterial (31, 50) eingewirkt wird, insbesondere das Bandmaterial (31, 50) vor Kontakt mit der Basiseinheit (5) an dem betroffenen Andruckelement (48, 53) vorpositioniert, vorbehandelt, insbesondere vorgewärmt, und/oder angeheftet wird, wobei vorzugsweise das Andruckelement (48, 53) mittels eines durch das Andruckelement (48, 53) fließenden Kühlfluids gekühlt wird.

8. Verfahren nach einem der vorhergehenden Ansprüche, **dadurch gekennzeichnet, dass** mindestens zwei Basiseinheiten (5) gleichzeitig in der Fördereinrichtung gefördert und die mindestens zwei Basiseinheiten (5) nacheinander durch mindestens zwei Applikationsstationen (2, 14, 17, 20, 23, 26, 29, 39-41, 67-72) geführt werden, wobei vorzugsweise an mindestens zweien der Applikationsstationen (2, 14, 17, 20, 23, 26, 29, 39-41, 67-72) unterschiedliche Ablegemuster (66) der Bänder (6) vorgesehen sind.

9. Vorrichtung zur Produktion von Faserverbundwerkstoff aufweisenden Werkstücken, umfassend
a) mindestens eine Applikationsstation (2, 14, 17, 20, 23, 26, 29, 39-41, 67-72) mit mindestens einer Ablegeeinheit (3), wobei die Ablegeeinheit (3) eingerichtet ist mindestens ein aus einem Bandmaterial (31, 50) gebildetes und zum Faserverbundwerkstoff gehörendes Band (6) auf mindestens eine Basiseinheit (5) in einem vorgegebenen Ablegemuster (66) abzulegen, und
b) eine Fördereinrichtung, welche eingerichtet ist, die mindestens eine Basiseinheit (5) auf Haltemittel (97) haltend nacheinander zu mindestens zwei in Förderrichtung beabstandete Applikationsstationen (2, 14, 17, 20, 23, 26, 29, 39-41, 67-72) oder mindestens zweimal zu derselben Applikationsstation (2, 14, 17, 20, 23, 26, 29, 39-41, 67-72) zu fördern,
**gekennzeichnet durch**
c) mindestens eine vor der Applikationsstation (2, 14, 17, 20, 23, 26, 29, 39-41, 67-72) oder vor mindestens einer der Applikationsstationen (2, 14, 17, 20, 23, 26, 29, 39-41, 67-72) angeordnete Ausrichtungseinheit (11, 15, 18, 21, 24, 27, 42, 43, 91-95), welche eingerichtet ist, die räumliche Ausrichtung der Basiseinheit (5) oder mindestens einer der Basiseinheiten (5) mittels mindestens einer Rotation relativ zu den Haltemitteln (97) zu ändern.

10. Vorrichtung nach Anspruch 9, **dadurch gekennzeichnet, dass** die Ausrichtungseinheit (11, 15, 18, 21, 24, 27, 42, 43, 91-95) zur Aufnahme eines Stapels (84) der Basiseinheiten (5) eingerichtet ist.

11. Vorrichtung nach Anspruch 9 oder 10, **gekennzeichnet durch** mindestens eine zur Temperierung mindestens einer der in der Fördereinrichtung befindlichen Basiseinheiten (5) eingerichteten Temperiereinheit (44).

12. Vorrichtung nach einem der Ansprüche 9 bis 11, **gekennzeichnet durch** mindestens einen an mindestens einer der Applikationsstationen (2, 14, 17, 20, 23, 26, 29, 39-41, 67-72) angeordneten Vorratsbehälter (4) für das Bandmaterial (31, 50), wobei vorzugsweise für mindestens eine der Ablegeeinheiten (3) jeweils zwei Vorratsbehälter (4) vorgesehen sind, wobei weiter vorzugsweise Fügemittel vorgesehen sind, welche eingerichtet sind, einen Anfang des Bandmaterials (31, 50) eines der beiden Vorratsbehälter (4) an ein Ende des Bandmaterials (31, 50) des anderen der beiden Vorratsbehälter (4) zu fügen.

13. Vorrichtung nach Anspruch 12, **dadurch gekennzeichnet, dass** mindestens einer der Vorratsbehälter (4) Bandmaterial (31, 50) mit Solltrennstellen (56) aufweist, welche zumindest eine Teilmenge des Bandmaterials (31, 50) in erleichtert voneinander trennbare Bandmaterialteilstücke aufteilen.

14. Vorrichtung nach Anspruch 12 oder 13, **dadurch gekennzeichnet, dass** mindestens ein an der Ablegeeinheit (3) oder an einer der Ablegeeinheiten (3) angeordnetes Andruckelement (48, 53) mittels eines Kühlfluids gekühlt ist, wobei das Andruckelement (48, 53) eine an einer in einer Rollenhalterung fixierten feststehenden Achse (58) gelagerte Andruckrolle ist, wobei die Andruckrolle ein für den Kontakt mit dem Bandmaterial (31, 50) vorgesehenes Mantelelement (101) umfasst und mindestens ein Teil einer Kühlfluidleitung zwischen der Achse (58) und dem Mantelelement (101) verläuft oder durch mindestens eine zwischen Mantelelement (101) und Achse (58) angeordnete Kammer (60) gebildet ist, wobei vorzugsweise die Lagerung des Mantelelements (101) innerhalb einer Nutzbreite der Andruckrolle angeordnet ist.

15. Vorrichtung nach einem der Ansprüche 9 bis 14, **gekennzeichnet durch** mindestens einen zur Einwirkung auf das mindestens eine Andruckelement (48, 53) oder auf noch nicht verlegtes Bandmaterial (31, 50) geeigneten Aktor, insbesondere zum Anheften des Anfangs eines für eines der Andruckelemente (48, 53) vorgesehenes Bandmaterialstück an das Andruckelement (48, 53) und/oder zum Einbringen von Wärme, wobei der mindestens eine Aktor so angeordnet ist, dass er im Einsatzfall von einem unterhalb einer Förderebene (49) für die mindestens eine Basiseinheit (5) angeordneten Bereich auf das Andruckelement (48, 53) zugreift.

16. Vorrichtung nach einem der Ansprüche 9 bis 15, **dadurch gekennzeichnet, dass** die Applikationsstation (2, 14, 17, 20, 23, 26, 29, 39-41, 67-72) oder mindestens eine der Applikationsstationen (2, 14, 17, 20, 23, 26, 29, 39-41, 67-72) mindestens zwei im Produktionsprozess stationäre Ablegeeinheiten (3) aufweist, wobei Ablegeorte (30) der Ablegeeinheiten (3) in Förderrichtung mit Abstand zueinander angeordnet sind.

## Claims

1. Method for producing workpieces comprising fiber composite material, in which
a) a base unit (5) held by retaining means (97) of a conveyor device is guided through at least one application station (2, 14, 17, 20, 23, 26, 29, 39-41, 67-72), and
b) in order to form the workpieces at the application station (2, 14, 17, 20, 23, 26, 29, 39-41, 67-72), or at at least one of the application stations (2, 14, 17, 20, 23, 26, 29, 39-41, 67-72) during a translational movement of the base unit (5) through the application station (2, 14, 17, 20, 23, 26, 29, 39-41, 67-72) in question, at least one strip (6) belonging to the fiber composite material is laid onto the base unit (5),
**characterized in that**
c) by means of at least one orientation unit (11, 15, 18, 21, 24, 27, 42, 43, 91-95) which is arranged in the conveying direction upstream of the application station (2, 14, 17, 20, 23, 26, 29, 39-41, 67-72) or upstream of at least one of the application stations (2, 14, 17, 20, 23, 26, 29, 39-41, 67-72) the spatial orientation of the base unit (5) is changed by at least one rotation relative to the retaining means (97).

2. Method according to claim 1, **characterized in that** the change in orientation takes place while the base unit (5) is being conveyed on the conveyor device.

3. Method according to claim 1 or 2, **characterized in that** a first layer consisting of at least one strip (6) is laid onto a main base unit (96) not belonging to the conveyor device.

4. Method according to one of the preceding claims, **characterized in that** the at least one base unit (5) in the conveyor device is acted upon with heat at least also outside the at least one application station (2, 14, 17, 20, 23, 27, 29, 39-41, 67-72).

5. Method according to one of the preceding claims, **characterized in that** strip material (31, 50) for forming the at least one strip (6) is kept ready in at least one supply container (4), wherein preferably
- at at least one of the application stations (2, 14, 17, 20, 23, 27, 29, 39-41, 67-72) at least two of the supply containers (4) are loaded with strip material (31, 50) in such a manner that, during a planned strip deposition with a predetermined laying pattern (66), said supply containers are exhausted simultaneously or at least approximately simultaneously, or
- before a first of the supply containers (4) is replaced by a second of the supply containers (4), the strip material (31, 50) of the second supply container (4) is joined to the strip material (31, 50) of the first supply container (4).

6. Method according to claim 5, **characterized in that**, by means of the introduction of predetermined separating points (56), at least a partial quantity of the strip material (31, 50) is divided into strip material sections which are easily separable from one another and the respective length of which corresponds precisely or at least substantially to the length of the strip (6) to be formed therewith

7. Method according to one of the claims 5 or 6, **characterized in that** at at least one of the application stations (2, 14, 17, 20, 23, 27, 29, 39-41, 67-72) for laying the strip (6) or at least one of the strips (6), the associated strip material (31, 50) is pressed against the base unit (5) by a respective pressure element (48, 53) of a laying unit (3), wherein preferably before the strip material (31, 50) is pressed against the base unit (5), the strip material (31, 50) is acted upon from a region spaced apart from the pressure element (48, 53) in the pressure direction of the pressure element (48, 53), in particular the strip material (31, 50) is pre-positioned, pretreated, in particular preheated, and/or attached to the pressure element (48, 53) in question before contact with the base unit (5), wherein preferably the pressure element (48, 53) is cooled by means of a cooling fluid flowing through the pressure element (48, 53).

8. Method according to one of the preceding claims, **characterized in that** at least two base units (5) are conveyed simultaneously in the conveyor device, and the at least two base units (5) are guided successively through at least two application stations (2, 14, 17, 20, 23, 27, 29, 39-41, 67-72), wherein preferably at at least two of the application stations (2, 14, 17, 20, 23, 27, 29, 39-41, 67-72), different laying patterns (66) of the strips (6) are provided

9. Device for producing workpieces comprising fiber composite material, comprising
a) at least one application station (2, 14, 17, 20, 23, 27, 29, 39-41, 67-72) having at least one laying unit (3), wherein the laying unit (3) is configured to lay at least one strip (6), which is formed from a strip material (31, 50) and belongs to the fiber composite material, onto at least one base unit (5) in a predetermined laying pattern (66), and
b) a conveyor device which is configured to convey the at least one base unit (5) held on retaining means (97) successively to at least two application stations (2, 14, 17, 20, 23, 27, 29, 39-41, 67-72) spaced apart in the conveying direction or at least twice to the same application station (2, 14, 17, 20, 23, 27, 29, 39-41, 67-72),
**characterized by**
c) at least one orientation unit (11, 15, 18, 21, 24, 27, 42, 43, 91-95) which is arranged upstream of the application station (2, 14, 17, 20, 23, 27, 29, 39-41, 67-72) or upstream of at least one of the application stations (2, 14, 17, 20, 23, 27, 29, 39-41, 67-72) and which is configured to change the spatial orientation of the base unit (5) or of at least one of the base units (5) by means of at least one rotation relative to the retaining means (97).

10. Device according to claim 9, **characterized in that** the orientation unit (11, 15, 18, 21, 24, 27, 42, 43, 91-95) is configured for receiving a stack (84) of the base units (5).

11. Device according to claim 9 or 10, **characterized by** at least one tempering unit (44) which is configured for tempering at least one of the base units (5) in the conveyor device.

12. Device according to one of the claims 9 to 11, **characterized by** at least one supply container (4) for the strip material (31, 50), said supply container being arranged at at least one of the application stations (2, 14, 17, 20, 23, 27, 29, 39-41, 67-72), wherein preferably two supply containers (4) are in each case provided for at least one of the laying units (3), wherein further preferably joining means are provided which are configured to join a beginning of the strip material (31, 50) of one of the two supply containers (4) to an end of the strip material (31, 50) of the other of the two supply containers (4).

13. Device according to claim 12, **characterized in that** at least one of the supply containers (4) has strip material (31, 50) having predetermined separating points (56) which divide at least a partial quantity of the strip material (31, 50) into strip material sections which are easily separable from one another.

14. Device according to claim 12 or 13, **characterized in that** at least one pressure element (48, 53) arranged at the laying unit (3) or at one of the laying units (3) is cooled by means of a cooling fluid, wherein the pressure element (48, 53) is a pressure-exerting roller which is mounted on a fixed axle (58) secured in a roller holder, wherein the pressure-exerting roller comprises a casing element (101), which is provided for contact with the strip material (31, 50), and at least part of a cooling fluid line runs between the axle (58) and the casing element (101) or is formed by at least one chamber (60) arranged between casing element (101) and axle (58), wherein preferably the mounting of the casing element (101) is arranged within a working width of the pressure-exerting roller.

15. Device according to one of the claims 9 to 14, **characterized by** at least one actuator which is suitable for acting on the at least one pressure element (48, 53) or on strip material (31, 50) which has not yet been laid, in particular for attaching the beginning of a strip material piece, which is provided for one of the pressure elements (48, 53), to the pressure element (48, 53) and/or for introducing heat, wherein the at least one actuator is arranged in such a manner that, in the use situation, it grips the pressure element (48, 53) from a region arranged below a conveying plane (49) for the at least one base unit (5).

16. Device according to one of the claims 9 to 15, **characterized in that** the application station (2, 14, 17, 20, 23, 27, 29, 39-41, 67-72) or at least one of the application stations (2, 14, 17, 20, 23, 27, 29, 39-41, 67-72) has at least two laying units (3) which are stationary in the production process, wherein laying sites (30) of the laying units (3) are arranged at a distance from one another in the conveying direction.

## Revendications

1. Procédé de production de pièces comportant une matière composite fibreuse, procédé dans lequel
a) une unité de base (5) maintenue par des moyens de retenue (97) d'un mécanisme de transport est guidée à travers au moins une station d'application (2, 14, 17, 20, 23, 26, 29, 39 à 41, 67 à 72), et
b) au moins une bande (6) faisant partie de la matière composite fibreuse est posée sur l'unité de base (5) afin de former les pièces à la station d'application (2, 14, 17, 20, 23, 26, 29, 39 à 41, 67 à 72) ou à l'une au moins des stations d'application (2, 14, 17, 20, 23, 26, 29, 39 à 41, 67 à 72) lors d'un mouvement de translation de l'unité de base (5) à travers la station d'application concernée (2, 14, 17, 20, 23, 26, 29, 39 à 41, 67 à 72),
**caractérisé en ce que**
c) l'orientation spatiale de l'unité de base (5) est modifiée au moyen d'au moins une rotation par rapport au moyen de retenue (97) à l'aide d'au moins une unité d'orientation (11, 15, 18, 21, 24, 27, 42, 43, 91 à 95) disposée en amont de la station d'application (2, 14, 17, 20, 23, 26, 29, 39 à 41, 67 à 72) ou en amont d'au moins une des stations d'application (2, 14, 17, 20, 23, 26, 29, 39 à 41, 67 à 72) dans le sens de transport.

2. Procédé selon la revendication 1, **caractérisé en ce que** le changement d'orientation est effectué pendant que l'unité de base (5) est transportée sur le mécanisme de transport.

3. Procédé selon la revendication 1 ou 2, **caractérisé en ce qu'**une première couche comprenant au moins une bande (6) est déposée sur une unité de base (96) ne faisant pas partie du mécanisme de transport.

4. Procédé selon l'une des revendications précédentes, **caractérisé en ce que** l'au moins une unité de base (5) située dans le mécanisme de transport est soumise à la chaleur au moins également à l'extérieur de l'au moins une station d'application (2, 14, 17, 20, 23, 26, 29, 39 à 41, 67 à 72).

5. Procédé selon l'une des revendications précédentes, **caractérisé en ce que** la matière en bande (31, 50) destinée à former l'au moins une bande (6) est conservée dans au moins un récipient de stockage (4), de préférence
- au moins deux des récipients de stockage (4) sont pourvus de matière en bande (31, 50) au niveau d'au moins une des stations d'application (2, 14, 17, 20, 23, 26, 29, 39 à 41, 67 à 72) de manière à être épuisés en même temps ou au moins à peu près en même temps lors de la pose de bande planifiée avec un modèle de pose spécifié (66), ou
- la matière en bande (31, 50) du deuxième récipient de stockage (4) est assemblée à la matière en bande (31, 50) du premier récipient de stockage (4) avant de remplacer un premier des récipients de stockage (4) par un deuxième des récipients de stockage (4).

6. Procédé selon la revendication 5, **caractérisé en ce que** des points de séparation prédéterminés (56) sont prévus pour diviser au moins un sous-ensemble de la matière en bande (31, 50) en portions de matière en bande qui peuvent être séparées les unes des autres plus facilement et dont la longueur respective correspond exactement ou au moins sensiblement à la longueur de la bande (6) à former avec ceux-ci.

7. Procédé selon l'une des revendications 5 ou 6, **caractérisé en ce que**, à au moins une des stations d'application (2, 14, 17, 20, 23, 26, 29, 39 à 41, 67 à 72) destinée à la pose de la bande (6) ou d'au moins une des bandes (6), la matière en bande associée (31, 50) est pressée contre l'unité de base (5) avec un élément de pression respectif (48, 53) d'une unité de pose (3), de préférence une action étant menée sur la matière en bande (31, 50) depuis une zone espacée de l'élément de pression (48, 53) dans la direction de pression de l'élément de pression (48, 53) temporellement avant de presser la matière en bande (31, 50) contre l'unité de base (5), en particulier la matière en bande (31, 50) étant pré-positionnée, prétraitée, en particulier préchauffée et/ou fixée à l'élément de pression concerné (48, 53) avant de venir en contact avec l'unité de base (5), l'élément de pression (48, 53) étant de préférence refroidi au moyen d'un fluide de refroidissement qui s'écoule à travers l'élément de pression (48, 53).

8. Procédé selon l'une des revendications précédentes, **caractérisé en ce qu'**au moins deux unités de base (5) sont guidées simultanément dans le mécanisme de transport et les au moins deux unités de base (5) sont successivement guidées à travers au moins deux stations d'application (2, 14, 17, 20, 23, 26, 29, 39 à 41, 67 à 72), différents modèles de pose (66) des bandes (6) étant de préférence prévus sur au moins deux des stations d'application (2, 14, 17, 20, 23, 26, 29, 39 à 41, 67 à 72).

9. Dispositif de production de pièces comportant une matière composite fibreuse, ledit dispositif comprenant
a) au moins une station d'application (2, 14, 17, 20, 23, 26, 29, 39 à 41, 67 à 72) pourvue d'au moins une unité de pose (3), l'unité de pose (3) étant conçue pour poser au moins une bande (6) formée à partir d'une matière en bande (31, 50) et faisant partie de la matière composite fibreuse sur au moins une unité de base (5) suivant un modèle de pose spécifié (66), et
b) un mécanisme de transport qui est conçu pour transporter l'au moins une unité de base (5), en la maintenant sur des moyens de retenue (97), successivement en direction d'au moins deux stations d'application (2, 14, 17, 20, 23, 26, 29, 39 à 41, 67 à 72) ou au moins deux fois en direction de la même station d'application (2, 14, 17, 20, 23, 26, 29, 39 à 41, 67 à 72),
**caractérisé par**
c) au moins une unité d'orientation (11, 15, 18, 21, 24, 27, 42, 43, 91-95) qui est disposée en amont de la station d'application (2, 14, 17, 20, 23, 26, 29, 39 à 41, 67 à 72) ou en amont d'au moins une des stations d'application (2, 14, 17, 20, 23, 26, 29, 39 à 41, 67 à 72) et qui est conçue pour modifier l'orientation spatiale de l'unité de base (5) ou d'au moins une des unités de base (5) au moyen d'au moins une rotation par rapport aux moyens de retenue (97).

10. Dispositif selon la revendication 9, **caractérisé en ce que** l'unité d'orientation (11, 15, 18, 21, 24, 27, 42, 43, 91 à 95) est conçue pour recevoir un empilement (84) des unités de base (5).

11. Dispositif selon la revendication 9 ou 10, **caractérisé par** au moins une unité de régulation de température (44) conçue pour réguler la température d'au moins une des unités de base (5) situées dans le mécanisme de transport.

12. Dispositif selon l'une des revendications 9 à 11, **caractérisé par** au moins un récipient de stockage (4) qui est disposé au niveau d'au moins une des stations d'application (2, 14, 17, 20, 23, 26, 29, 39 à 41, 67 à 72) et qui est destiné à la matière en bande (31, 50), deux récipients de stockage (4) étant de préférence prévus pour au moins une des unités de pose (3), des moyens d'assemblage étant en outre prévus de préférence, lesquels sont conçus pour assembler une amorce de la matière en bande (31, 50) de l'un des deux récipients de stockage (4) à une extrémité de la matière en bande (31, 50) de l'autre des deux récipients de stockage (4).

13. Dispositif selon la revendication 12, **caractérisé en ce qu'**au moins un des récipients de stockage (4) comporte une matière en bande (31, 50) pourvue de points de séparation prédéterminés (56) qui divisent au moins un sous-ensemble de la matière en bande (31, 50) en portions de matière en bande qui peuvent être séparées les unes des autres plus facilement.

14. Dispositif selon la revendication 12 ou 13, **caractérisé en ce qu'**au moins un élément de pression (48, 53), disposé sur l'unité de pose (3) ou sur l'une des unités de pose (3), est refroidi au moyen d'un fluide de refroidissement, l'élément de pression (48, 53) étant un rouleau de pression monté sur un axe fixe (58) fixé dans un support de rouleau, le rouleau de pression comprenant un élément d'enveloppe (101) destiné à venir en contact avec la matière en bande (31, 50) et au moins une partie d'une conduite de fluide de refroidissement s'étendant entre l'axe (58) et l'élément d'enveloppe (101) ou étant formée par au moins une chambre (60) disposée entre l'élément d'enveloppe (101) et l'axe (58), le montage sur palier de l'élément d'enveloppe (101) étant de préférence disposé dans une largeur utile du rouleau de pression.

15. Dispositif selon l'une des revendications 9 et 14, **caractérisé par** un actionneur apte à agir sur l'au moins un élément de pression (48, 53) ou sur la matière en bande (31, 50) non encore posée, en particulier pour fixer l'amorce d'une portion de matière en bande, destinée à l'un des éléments de pression (48, 53), à l'élément de pression (48, 53) et/ou pour introduire de la chaleur, l'au moins un actionneur étant disposé de manière à accéder, lors de l'utilisation, à l'élément de pression (48, 53) depuis une zone disposée au-dessous d'un plan de transport (49) destinée à l'au moins une unité de base (5).

16. Dispositif selon l'une des revendications 9 à 15, **caractérisé en ce que** la station d'application (2, 14, 17, 20, 23, 26, 29, 39 à 41, 67 à 72) ou au moins une des stations d'application (2, 14, 17, 20, 23, 26, 29, 39 à 41, 67 à 72) comporte au moins deux unités de pose (3) qui sont stationnaires dans le processus de production, des sites de pose (30) des unités de pose (3) étant disposés à distance les uns des autres dans la direction de transport.
